# EUROPÄISCHE PATENTSCHRIFT

(11) **EP 3 559 594 B1**
(45) Veröffentlichungstag und Bekanntmachung des Hinweises auf die Patenterteilung: **09.02.2022**
(21) Anmeldenummer: 17823112.2
(22) Anmeldetag: 20.12.2017
(51) Int. Cl.: G01B 21/04, G01B 1/00, B23Q 17/00

(54) **VORRICHTUNG ZUM EINSATZ IN EINER NUMERISCH GESTEUERTEN WERKZEUGMASCHINE ZUR VERWENDUNG IN EINEM VERFAHREN ZUM VERMESSEN DER NUMERISCH GESTEUERTEN WERKZEUGMASCHINE**
DEVICE FOR USE IN A NUMERICALLY CONTROLLED MACHINE TOOL FOR APPLICATION IN A METHOD FOR MEASURING THE NUMERICALLY CONTROLLED MACHINE TOOL
DISPOSITIF DESTINÉ À ÊTRE UTILISÉ DANS UNE MACHINE-OUTIL À COMMANDE NUMÉRIQUE CONÇUE POUR ÊTRE EMPLOYÉE DANS UN PROCÉDÉ POUR MESURER LA MACHINE-OUTIL À COMMANDE NUMÉRIQUE

(30) Priorität: 22.12.2016 DE 102016226073
(43) Veröffentlichungstag der Anmeldung: 30.10.2019
(73) Patentinhaber: DECKEL MAHO Pfronten GmbH, 87459 Pfronten (DE)
(72) Erfinder: MAIER, Marzell, 88316 Isny (DE); MARCZINEK, Stefan, 86983 Lechbruck (DE); LOCHBIHLER, Thomas, 6682 Vils (AT)
(74) Vertreter: MERH-IP Matias Erny Reichl Hoffmann Patentanwälte PartG mbB
(86) Internationale Anmeldenummer: PCT/EP2017/083727
(87) Internationale Veröffentlichungsnummer: WO 2018/115071

(56) Entgegenhaltungen:
- DE-A1- 19 507 805
- DE-A1- 19 611 617
- DE-A1- 19 720 883
- US-A- 5 111 590

## Beschreibung

Die vorliegende Erfindung betrifft eine Vorrichtung zum Einsatz an einer numerisch gesteuerten Werkzeugmaschine zur Verwendung in einem Verfahren zum Vermessen der numerisch gesteuerten Werkzeugmaschine. Desweitern betrifft die vorliegende Anmeldung das Verfahren selbst sowie ein System, das eine numerisch gesteuerte Werkzeugmaschine und die erfindungsgemäße Vorrichtung umfasst. Das Verfahren wird nicht beansprucht.

### HINTERGRUND DER ERFINDUNG

Vermessungsverfahren an Werkzeugmaschinen, wie sie zum Beispiel aus EP 1696 289 A1 oder DE 10 2010 038 783 A1 bekannt sind, dienen unter anderem der Überprüfung der Werkzeugmaschine auf Genauigkeitsabweichungen. Diese können durch Verschleiß von z.B. Führungen, oder aber durch eine Kollision von z.B. beweglichen Maschinenteilen miteinander entstehen.

In EP 1 696 289 A1 wird ein Verfahren zur Vermessung einer Rundachse an einer Werkzeugmaschine beschrieben. Hierbei wird eine Messkugel in zwei Messpositionen (Zwei-Punkt-Messung), die sich durch die Weiterschwenkung einer Rundachse ergeben, auf der die Messkugel befestigt ist, angetastet. Da der Radius der Messkugel bekannt ist, kann durch Abtasten an drei Punkten der Messkugeloberfläche (in jeder der zwei Messpositionen der Messkugel) und Bestimmen der Koordinaten der drei Oberflächenpunkte die Raumlage des jeweiligen Kugelmittelpunkts der Messkugel (oder eines anderen Messkugelbezugspunkts) an der jeweiligen Messposition z.B. in Bezug auf das Maschinenkoordinatensystem ermittelt werden. Aus dem Schwenkwinkel der Rundachse zwischen den zwei Messpositionen und den jeweiligen ermittelten Raumlagen wird eine Mittelpunktposition der Rundachse ermittelt.

Aus den Koordinaten der zwei Messungen wird der Drehpunkt der Rundachse ermittelt, auf der die Messkugel befestigt wurde. Zur Berechnung einer Linearachse kann die beschriebene Zwei-Punkt-Messung in einer anderen Höhe über der Rundachse wiederholt werden, wobei für diese Höhe aus der Zwei-Punkt-Messung wiederum ein Drehpunkt berechnet werden kann. Die Verbindung beider Drehpunkte wird verwendet, die Richtung der Rundachse zu bestimmen.

In DE 10 2010 038 783 A1 wird ein Verfahren beschrieben, bei dem die Bewegung einer rotatorischen Achse durch das Antasten mehrerer Positionen einer Lehre am Kreisumfang der rotatorischen Achse durch die Bewegung der linearen Maschinenachsen ermittelt wird. Die so ermittelten Messwerte werden benutzt, rechnerisch eine Kreisbahn zu bestimmen, die durch die Koordinaten der angetasteten Punkte verläuft. Es wird zudem beschrieben, dass die Messergebnisse verwandt werden können, einen relativen Neigungsfehler zwischen der rotatorischen Achse und den antastenden Linearachsen zu ermitteln.

Ferner ist ein Verfahren (und eine zugehörige Vorrichtung) zur Überprüfung der Maschinengenauigkeit des Messsysteme-Herstellers RENISHAW bekannt, bei dem die Messungen (Kreisformtest) mittels eines "Ballbars" sowohl über Vollkreise, als auch über Teilkreise durchgeführt werden können. Dabei werden Messungen von allen 3 Ebenen einer Maschine in einer Aufspannung durchgeführt. Anhand von 3 einander zugeordneten Messungen kann daraufhin die volumetrische Genauigkeit einer Maschine ermittelt werden.

Aus den oben beschriebenen Verfahren ergeben sich aber Nachteile in der Art, dass die verwendeten Messaufbauten teilweise versetzt werden müssen, um bestimmte Achsen zu vermessen. Das Versetzen des Messaufbaus verlängert aber die Dauer der Vermessung der Achsen und birgt zudem die Gefahr, zusätzliche Fehlereinflüsse in die Messung einzutragen. Ein anderer Nachteil ergibt sich bei dem System von RENISHAW, dass ein Großteil der Kreisformtests nur über relativ beschränkte Teilkreise durchgeführt werden kann, sodass Maschinenungenauigkeiten in den nicht durchfahrenen Bereichen "übersehen" werden können. Ferner wird bei dem Verfahren von RENISHAW ein Stützelement auf dem Drehzentrum des Maschinentisches befestigt, um die kreisförmige Bewegung zwischen Arbeitsspindel und Maschinentisch zu analysieren. Dabei kann ein nicht unerheblicher Positionierungsfehler des Stützelements die Abweichungen der kreisförmigen Bewegung überlagern, da eine exakte Positionierung auf dem Drehzentrum des Tisches quasi ausgeschlossen ist und aber eine sehr nahe Positionierung am Drehzentrum nur wenige Messungen erlaubt, auf Basis derer eine Aussage über die Lage des "realen" Drehzentrums des Maschinentisches getroffen werden müsste. DE 195 07 805 A1 offenbart einen Prüfkörper für Koordinatenmessgeräte und Werkzeugmaschinen. DE197 20 883 A1 offenbart einen demontierbaren Prüfkörper in Form eines Tetraeders. DE 196 11 617 A1 offenbart einen Prüfkörper sowie die Überwachung von Koordinatenmessgeräten. US 5,111,590 offenbart einen Prüfkörper.

### ZUSAMMENFASSUNG DER ERFINDUNG

Eine Aufgabe der vorliegenden Erfindung ist es daher, eine Vorrichtung zum Einsatz an einer numerisch gesteuerten Werkzeugmaschine zur Verwendung in einem Verfahren zum Vermessen der numerisch gesteuerten Werkzeugmaschine bereitzustellen, mit dem die obigen Probleme vermieden werden und auf Basis deren eine Optimierung der Werkzeugmaschinengeometrie stattfinden kann.

Des Weiteren ist es Aufgabe der vorliegenden Erfindung, ein System bereitzustellen, das die erfindungsgemäße Vorrichtung und eine Werkzeugmaschine umfasst. Ein entsprechendes Verfahren wird nicht beansprucht. Diese Aufgaben werden gelöst durch eine Vorrichtung nach Anspruch 1 und ein System nach Anspruch 15. Die abhängigen Ansprüche beziehen sich auf vorteilhafte Ausführungsbeispiele der erfindungsgemäßen Vorrichtung. Die erfindungsgemäße Vorrichtung zum Einsatz an einer numerisch gesteuerten Werkzeugmaschine zur Verwendung in einem Verfahren zum Vermessen der numerisch gesteuerten Werkzeugmaschine, weist auf: ein erstes Messelement zur Vermessung durch eine Messvorrichtung, ein zweites Messelement zur Vermessung durch die Messvorrichtung, ein Abstandselement, an dem das erste Messelement und das zweite Messelement voneinander beabstandet angeordnet sind, und zumindest einen Befestigungsabschnitt zur Befestigung der Vorrichtung an einem Maschinenteil der Werkzeugmaschine.

Durch die erfindungsgemäße Vorrichtung mit einer entsprechenden Anordnung der Messelemente können eine Vielzahl von Achsen der Werkzeugmaschine in einem Messzyklus vermessen und ihre entsprechenden Fehler (wie z.B. in der Geradheit der Linearachsen, Kreuzwinkel, Kompensationsfehler Linearachsen, Teilungsfehler Rundachsen, Taumel der Rundachsen, etc.) ermittelt werden. So ist es zum Beispiel bei einer 5-Achs-Bearbeitungsmaschine möglich, die 3 Linearachsen sowie die 2 Rundachsen in einem Zyklus zu vermessen. Aber auch eine Vielzahl anderer Arten von Werkzeugmaschinen (z.B. Drehmaschinen, Schleifmaschinen, Erodiermaschinen, etc.) lassen sich vorteilhafterweise mit der erfindungsgemäßen Vorrichtung vermessen. Die erhaltenen Ergebnisse können dann wiederum genutzt werden, um zu entscheiden, ob die entsprechende Werkzeugmaschine einer aufwendigeren Überarbeitung unterzogen werden muss (zum Beispiel durch Nacharbeiten oder Austausch von Führungen, Lagerungen etc.), oder ob stattdessen eine deutlich zeit- und kostensparende Möglichkeit der Kompensation, also das Einstellen der Maschinenparameter (Korrektur von Soll-Werten/Soll-Positionen), besteht.

Dadurch ist es möglich, neben der Maschinenkinematik zusätzlich die Grundgeometrie (Genauigkeit) der Maschine zu kalibrieren.

Die Verwendung von zwei Messelementen, die durch ein Abstandselement voneinander definiert beabstandet sind und z.B. durch einen Messtaster angetastet werden, um die Position der Messelemente zu messen (Kugelabstandsmessung), führt unter anderem dazu, dass das Verfahren der Vermessung der Werkzeugmaschine deutlich vereinfacht werden kann. Der Anwender muss die Vorrichtung lediglich einmal auf dem Maschinenteil positionieren und kann entsprechend der Konfiguration der Werkzeugmaschine sämtliche Achsen mittels der positionierten Vorrichtung vermessen.

Die Verwendung des Messtasters für das Erfassen der Position der Messelemente ist nur ein Beispiel von Punktmesssystemen und soll im Folgenden beispielhaft weiter angeführt werden. Es können jedoch auch jegliche andere Punktmesssysteme Anwendung finden, wie z.B. ein Laserpunktmesser oder ein Luftspaltmesser.

Zusätzlich ist es durch die Vorrichtung möglich, auf eine im Vergleich zu den üblichen Vermessungsverfahren feine Unterteilung der verschiedenen Positionen des Maschinenteils mit der befestigten Vorrichtung zu verzichten, da durch die zwei Messelemente pro Position mehr Messpunkte erfasst werden können. Somit können in gröberen Schritten die Achsen der Werkzeugmaschine vermessen werden, was das Verfahren insgesamt beschleunigt.

Dabei ist es ein Vorteil der beschriebenen Vorrichtung, dass der Abstand zwischen den Messelementen nicht nur bekannt ist, sondern dass dieser auch möglichst konstant über mehrere Messzyklen hinweg gehalten werden kann. Da sich z.B. bei fortlaufendem Betrieb der Maschine auch die Temperaturverteilung und -werte innerhalb der Maschine ändern können, könnten sich diese Änderungen im Zustand des Abstandselements und somit in der Vermessung wiederfinden. Hier wurde aufgrund dessen ein Abstandselement gewählt, das weitestgehend unempfindlich gegenüber zu erwartenden Änderungen der Umgebungsbedingungen ist.

Somit kann dieser Abstand als eine Art "Längennormal" und somit als ein Referenzwert für die Vermessung der Maschine benutzt werden, auch über einen längeren Messzyklus mit veränderlichen Umgebungsbedingungen hinweg.

Ein weiterer entscheidender Punkt bei der oben beschriebenen Vorrichtung, um Fehlereinflüsse bei der Vermessung der Messelemente durch eine fehlerhafte Messanordnung zu vermeiden, ist, dass die Messelemente zusammen mit dem Abstandselement unter einer nur sehr geringen Verspannung an dem Maschinenteil befestigt werden können.

Dies wird durch klemmende und/oder magnetische Befestigungs- und/oder Arretierungsmöglichkeiten erreicht. Sie ermöglichen es, die Messelemente zusammen mit dem Abstandselement auf dem Maschinenteil wie gewünscht zu positionieren, und erst danach die Lage des Abstandselements mit den Messelementen gegenüber dem Maschinenteil zu fixieren. Wobei ausdrücklich darauf hingewiesen wird, dass die Befestigung der Vorrichtung nicht allein an einem Maschinenteil stattfinden kann, sondern darüber hinaus auch auf einem entsprechenden Werkstück, das z.B. im Anschluss der Vermessung der Werkzeugmaschine mit Werkstück bearbeitet werden soll, bzw. kombiniert an einem Maschinenteil und einem Werkstück stattfinden kann.

Auch eine Klassifizierung der in einem Betrieb vorhandenen Werkzeugmaschinen eines Maschinenparks ist dadurch sehr schnell möglich, um entsprechend präzise zu fertigende Teile in den Werkzeugmaschinen zu fertigen, die die dafür notwendigen Genauigkeiten aufweisen. Ferner kann durch Kenntnis der entsprechenden Ungenauigkeiten einer Werkzeugmaschine vorhergesagt werden, welche Genauigkeit das zu fertigende Teil haben wird.

Mit Anwendung der erfindungsgemäßen Vorrichtung und der darauf basierenden, späteren Kalibrierung der Werkzeugmaschine konnten die Erfinder eine deutliche Erhöhung der Maschinengenauigkeit erreichen und dabei die Vorrichtung für die Vermessung der Werkzeugmaschine sehr einfach und unkompliziert halten.

Eine besonders vorteilhafte Weiterbildung der erfindungsgemäßen Vorrichtung besteht darin, dass das erste und zweite Messelement jeweils über eine starre Verbindung an dem Abstandselement befestigt sind.

An dieser Stelle und im Folgenden soll die starre Verbindung so verstanden werden, dass die relative Lage der Messelemente zu dem Abstandselement unveränderlich ist. Die starre Verbindung kann somit ferner als eine gesicherte und fixierte Verbindung zwischen Messelementen und Abstandselement verstanden werden, sodass die Messelemente und das Abstandselement nur durch ein Lösen der Sicherung/Fixierung voneinander getrennt werden können bzw. die relative Lage dieser Elemente zueinander verändert werden kann. Dies ist für die Rückführbarkeit von Messergebnissen, insbesondere bei Mehrfach-Messungen von großem Vorteil. Denn durch das Lösen der Verbindung geht der vorher festgelegte Abstand und die vorher festgelegte Lage zwischen den Messelementen verloren, sodass nach erneuter Sicherung der Messelemente auf bzw. an dem Abstandselement die erfindungsgemäße Vorrichtung erneut vermessen werden müsste.

Durch die starre Verbindung ist gewährleistet, dass die zwei Messelemente und das Abstandselement eine Einheit bilden. Erst dadurch ist die Ausbildung dieser Einheit als eine Art "Längennormal" möglich. Dies ist für die Vermessung der Werkzeugmaschine im Hinblick auf Genauigkeit der Messergebnisse und als mögliche Verwendung als Referenzwert während der Vermessung von Bedeutung.

Ferner kann die erfindungsgemäße Vorrichtung vorteilhaft dadurch weitergebildet werden, dass das Abstandselement einen zwischen dem ersten und zweiten Messelement angeordneten Abschnitt aufweist, der aus einem Material ausgebildet ist, das einen thermischen Ausdehnungskoeffizienten kleiner oder gleich 3,0 · 10⁻⁶ K⁻¹ aufweist, insbesondere kleiner oder gleich 1,0 · 10⁻⁶ K⁻¹; oder das Abstandselement einen zwischen dem ersten und zweiten Messelement angeordneten Abschnitt aufweist, der aus einem Material ausgebildet ist, das in Abstandsrichtung zwischen dem ersten und zweiten Messelement einen thermischen Ausdehnungskoeffizienten kleiner oder gleich 3,0 · 10⁻⁶ K⁻¹ aufweist, insbesondere kleiner oder gleich 1,0 · 10⁻⁶ K⁻¹.

Überdies hinaus kann die erfindungsgemäße Vorrichtung vorteilhaft dadurch weitergebildet werden, dass das Abstandselement ein Material aufweist, das zumindest zwischen dem ersten und zweiten Messelement einen thermischen Ausdehnungskoeffizienten kleiner oder gleich 3,0 · 10⁻⁶ K⁻¹ aufweist, insbesondere kleiner oder gleich 1,0 · 10⁻⁶ K⁻¹; oder das Abstandselement ein Material aufweist, das zumindest zwischen dem ersten und zweiten Messelement in Abstandsrichtung zwischen dem ersten und zweiten Messelement einen thermischen Ausdehnungskoeffizienten kleiner oder gleich 3,0 · 10⁻⁶ K⁻¹ aufweist, insbesondere kleiner oder gleich 1,0 · 10⁻⁶ K⁻¹.

Es ist in jedem Fall vorteilhaft, wenn entweder das gesamte Abstandselement oder ein Teil von dem Abstandselement, der zwischen dem ersten und dem zweiten Messelement angeordnet ist, aus einem Material besteht, dass einen vergleichsweise geringen thermischen Ausdehnungskoeffizienten aufweist, um gegenüber Änderungen der Umgebungstemperatur weitgehend unempfindlich zu sein.

Eine vorteilhafte Weiterbildung der erfindungsgemäßen Vorrichtung besteht darin, dass das Abstandselement einen zwischen dem ersten und zweiten Messelement angeordneten Abschnitt aufweist, der aus einem kohlefaserverstärktem Kunststoff ausgebildet ist, oder das Abstandselement aus einem kohlefaserverstärktem Kunststoff ausgebildet ist, oder das Abstandselement als Kohlefaserstab ausgebildet ist.

Kohlefaserverstärkter Kunststoff bzw. ein Kohlefaserstab haben sich bereits in ersten Versuchen der Erfinder als überaus vorteilhaft erwiesen, da dieser Werkstoff und seine Verarbeitung zu einem stabförmigen Abstandselement nicht nur die Eigenschaft eines sehr geringen thermischen Ausdehnungskoeffizienten besitzt, sondern das daraus entstandene Abstandselement auch sehr stabil gegenüber Biege- und Zug/DruckBelastungen ist und dabei auch noch ein vergleichsweise geringes Eigengewicht aufweist. Dies ist wiederum sehr vorteilhaft, da sich das stabförmige Abstandselement durch sein geringes Eigengewicht selbst deutlich weniger verformt (außerhalb der senkrechten Anordnung) und somit der eingestellte Abstand zwischen den beiden Messelementen mit geringeren Fehlereinflüssen versehen ist, unabhängig davon in welcher Lage das stabförmige Abstandselement in der Werkzeugmaschine angeordnet wird.

Die erfindungsgemäße Vorrichtung lässt sich ferner dadurch weiterbilden, dass das Abstandselement einen zwischen dem ersten und zweiten Messelement angeordneten Abschnitt aufweist, der aus Quarzglas ausgebildet ist, oder das Abstandselement aus einem Quarzglas ausgebildet ist, oder das Abstandselement als Quarzglasstab ausgebildet ist.

Ein weiterer, im Hinblick auf einen sehr geringen thermischen Ausdehnungskoeffizienten vorteilhafter Werkstoff für die Ausbildung zum Abstandselement ist Quarzglas. Dieser bietet wie Kohlenstoff eine sehr geringe Anfälligkeit gegenüber Temperaturänderungen. Seine höhere Dichte gilt es allerdings bei der Ausbildung zum Abstandselement zu berücksichtigen.

Jedoch können anstatt des Kohlefaserstabes oder eines Quarzglasstabes auch metallische Werkstoffe für das Abstandselement Anwendung finden, z.B. aus Kostengründen und/oder geringeren Genauigkeitsansprüchen. Metallische Werkstoffe haben im Vergleich zu einem Kohlefaserwerkstoff oder Quarzglas deutlich höhere Wärmeausdehnungskoeffizienten und reagieren daher deutlich stärker auf Veränderungen der Umgebungstemperaturen. Ferner können Abstandselemente aus metallischem Werkstoff ein deutlich höheres Eigengewicht als z.B. ein Kohlefaserstab aufweisen, was sich zusätzlich bei bestimmten Positionierungen der Vorrichtung auf die Messgenauigkeit auswirken kann.

Eine besonders vorteilhafte Weiterbildung der erfindungsgemäßen Vorrichtung ist dadurch möglich, dass das erste und/oder das zweite Messelement eine Messkugel ist oder zumindest einen Messkugelabschnitt aufweist.

Um die Messelemente während der Vermessung als einen Messpunkt wahrzunehmen, hat es sich als besonders vorteilhaft erwiesen, die Messelemente als eine Kugel oder mit kugelförmigen Abschnitten auszubilden. Durch diese Form ist es möglich, mit einem bekannten Radius der Kugel/des Kugelabschnitts den Mittelpunkt der Kugel/des Kugelabschnitts zu erfassen, unabhängig davon, von welcher Seite der Messtaster das Messelement berührt, und den erfassten Mittelpunkt als Messpunkt zu verwenden.

Dabei ist es von besonderem Vorteil, wenn die Kugeln oder die Kugelabschnitte über eine größtmögliche, freie Fläche verfügen, die z.B. von dem Messtaster angetastet werden kann. Hierdurch ergibt sich der Vorteil, dass die Mittelpunktbestimmung jeder Kugel separat durchgeführt werden kann. Zudem kann eine Verlagerung der Kugeln zueinander leichter erkannt werden, da die Kugeln beinahe von allen Seiten erfasst werden können. Beide Vorteile bieten die Möglichkeit, die Messgenauigkeit weiter zu erhöhen.

Die erfindungsgemäße Vorrichtung ist durch ein erstes Befestigungselement mit einem ersten Befestigungsabschnitt zur Befestigung der Vorrichtung an dem Maschinenteil der Werkzeugmaschine und ein zweites Befestigungselement mit einem zweiten Befestigungsabschnitt zur Befestigung an dem Maschinenteil der Werkzeugmaschine, wobei das erste Befestigungselement und das zweite Befestigungselement voneinander beabstandet an dem Abstandselement angeordnet sind, weitergebildet.

In einem nicht beanspruchten Beispiel sind das erste und zweite Befestigungselement jeweils über eine starre Verbindung an dem Abstandselement und/oder an einem jeweiligen der Messelemente befestigt.

Dies ermöglicht eine Mehrpunkt-Befestigung der Einheit aus Messelementen und Abstandselement an dem Maschinenteil für eine stabilere Anordnung dieser Einheit. Ein bevorzugtes Beispiel ist hierbei eine Zwei-Punkt-Befestigung der Vorrichtung. Dennoch sind auch Befestigungen mit nur einem oder mehr als zwei Befestigungselementen möglich. Daher soll die Zwei-Punkt-Befestigung im Folgenden als ein gewähltes Beispiel aus einer Vielzahl von Möglichkeiten verstanden werden. Wobei noch einmal ausdrücklich darauf hingewiesen wird, dass die Befestigung der Vorrichtung nicht allein an einem Maschinenteil stattfinden kann, sondern darüber hinaus auch auf einem entsprechenden Werkstück bzw. kombiniert an einem Maschinenteil und einem Werkstück stattfinden kann.

Die erfindungsgemäße Vorrichtung ist ferner dadurch weitergebildet, dass das erste und zweite Befestigungselement jeweils über eine arretierbare Verbindung an dem Abstandselement und/oder an einem jeweiligen der Messelemente befestigt sind.

Die arretierbare Verbindung ermöglicht es, die Befestigungselemente an dem Maschinenteil zu fixieren, während aber die Lage von Abstandselement und/oder Messelement gegenüber der Befestigungselemente noch veränderbar ist. Dies ist für eine spannungsfreie Anordnung der Messelemente mit dem Abstandselement besonders wichtig, da nur so im hohen Maße gewährleistet werden kann, dass der vorher definierte Abstand durch das Abstandselement auch nach dem Anordnen und Arretieren in der Werkzeugmaschine vorhanden ist.

Eine vorteilhafte Weiterbildung der erfindungsgemäßen Vorrichtung besteht darin, dass das erste und/oder zweite Befestigungselement in nicht arretiertem Zustand der arretierbaren Verbindung relativ zu dem Abstandselement schwenkbar und/oder frei rotierbar ist.

Die erfindungsgemäße Vorrichtung kann dadurch vorteilhaft weitergebildet werden, dass die arretierbare Verbindung des ersten und/oder zweiten Befestigungselements eine oder mehrere Gelenke, insbesondere Dreh- und/oder Kugelgelenke aufweist.

Insbesondere die Möglichkeit, dass die Verbindung zwischen Befestigungselementen und Abstandselement bzw. Messelement eine Vielzahl an rotatorischen Freiheitsgraden aufweist, ermöglicht es, einen möglichst spannungsfreien Zustand des Abstandselements zu gewährleisten und somit den vorher definierten Abstand durch das Abstandselement (als ein entsprechend wichtiger Teil des "Längennormals") so geringfügig wie möglich zu beeinflussen. Insbesondere Dreh-und/oder Kugelgelenke sind daher für die möglichst spannungsfreie Befestigung des Abstandselements mit den Messelementen eine bevorzugte Wahl.

Eine besonders vorteilhafte Weiterbildung der erfindungsgemäßen Vorrichtung besteht darin, dass das erste Befestigungselement über ein erstes Zwischenelement mit dem Abstandselement und/oder einem jeweiligen der Messelemente verbunden ist, wobei zwischen dem ersten Befestigungselement und dem ersten Zwischenelement ein erstes Gelenk angeordnet ist und zwischen dem ersten Zwischenelement und dem Abstandselement und/oder dem jeweiligen der Messelemente ein zweites Gelenk angeordnet ist, und/oder das zweite Befestigungselement über ein zweites Zwischenelement mit dem Abstandselement und/oder einem jeweiligen der Messelemente verbunden ist, wobei zwischen dem zweiten Befestigungselement und dem zweiten Zwischenelement ein drittes Gelenk angeordnet ist und zwischen dem zweiten Zwischenelement und dem Abstandselement und/oder dem jeweiligen der Messelemente ein viertes Gelenk angeordnet ist.

Um die Flexibilität der Befestigung von Abstandselement mit den Messelementen weiter zu erhöhen und auch dem Erfordernis einer möglichst spannungsfreien Anordnung immer mehr zu entsprechen, können Zwischenelemente verwendet werden, die zwischen den Befestigungselementen und den Messelementen bzw. dem Abstandselement angeordnet sind. Jedes dieser Zwischenelemente weist mindestens zwei Gelenke auf, die für die Verbindung von Befestigungselement mit Abstandselement und/oder Messelement vorgesehen sind. Auch diese Gelenke können wieder eine Vielzahl von rotatorischen Freiheitsgraden aufweisen, die es ermöglicht, die Befestigungselemente zuerst gegenüber dem Maschinenteil zu fixieren und danach eine Fixierung von Messelementen mit dem Abstandselement gegenüber den Befestigungselementen vorzunehmen.

Die erfindungsgemäße Vorrichtung kann weiterhin in einer vorteilhaften Weise weitergebildet werden, dass das erste Zwischenelement eine Arretiereinrichtung aufweist zum gleichzeitigen Arretieren der ersten und zweiten Gelenke, und/oder das zweite Zwischenelement eine Arretiereinrichtung aufweist zum gleichzeitigen Arretieren der dritten und vierten Gelenke.

Ferner kann der möglichst spannungsfreie Zustand des Abstandselements mit den Messelementen dadurch bewerkstelligt werden, dass die Arretierung über die Zwischenelemente erfolgt, wobei bei der Arretierung eines Zwischenelements gleichzeitig mindestens zwei Gelenke in ihrem Zustand fixiert/arretiert werden. Hierfür eignen sich wieder in vorteilhafter Weise klemmende Arretierungsmöglichkeiten wie bereits weiter oben beschrieben.

Die erfindungsgemäße Vorrichtung kann weiterhin in der Weise vorteilhaft weitergebildet werden, indem das erste und/oder zweite Befestigungselement einen Magnethalter zur Befestigung an dem Maschinenteil der Werkzeugmaschine aufweist.

Hierdurch ist ein sehr flexibler Einsatz der Vorrichtung auf allen Oberflächen möglich, die magnetisierbar sind. Somit ist die Vorrichtung nicht darauf angewiesen, mittels vorhandener Anschraubpunkte oder ähnliche, rasterabhängige Befestigungsmöglichkeiten innerhalb der Werkzeugmaschine befestigt zu werden, sondern kann beliebig an dem Teil der Maschine durch die magnetischen Halterungen befestigt werden, das für die Vermessung der Werkzeugmaschine (oder ihrer Komponenten) benötigt wird.

Die erfindungsgemäße Vorrichtung kann ferner dadurch vorteilhaft weitergebildet werden, dass der Magnethalter einen schaltbaren Elektromagnet und/oder einen mechanisch schaltbaren Magnetfuß aufweist.

Sowohl elektrisch betriebene Magnetspulen oder rein mechanisch schaltende Magnetfüße (z.B. durch Lageänderung des verbauten Dauermagneten innerhalb des Magnetfußes) können für die Befestigung der Vorrichtung innerhalb der Werkzeugmaschine verwendet werden.

Ferner können aber auch lösbare, klebende Verbindungen zum Einsatz kommen genauso wie klemmende Verbindungen (wie z.B. Schraubverbindungen, Klemmhalter, etc.), um die Befestigungselemente an einem Maschinenteil der Werkzeugmaschine zu befestigen.

Eine vorteilhafte Weiterbildung der erfindungsgemäßen Vorrichtung besteht darin, dass das Abstandselement einen vorgegebenen Abstand zwischen dem ersten und zweiten Messelement definiert.

Vorteilhafterweise verfügt das Abstandselement zudem über einen sehr geringen thermischen Ausdehnungskoeffizienten, sodass der vorgegebene Abstand zwischen dem ersten und zweiten Messelement auch bei veränderlichen Umgebungsbedingungen (wie z.B. Temperaturänderungen) gehalten werden kann.

Die erfindungsgemäße Vorrichtung kann dadurch vorteilhaft weitergebildet werden, dass der vorgegebene Abstand zwischen dem ersten und zweiten Messelement größer oder gleich 100 mm ist, und insbesondere größer oder gleich 200 mm, insbesondere größer oder gleich 300 mm.

Ferner kann die erfindungsgemäße Vorrichtung dadurch vorteilhaft weitergebildet werden, dass der vorgegebene Abstand zwischen dem ersten und zweiten Messelement kleiner oder gleich 800 mm ist, und insbesondere kleiner oder gleich 700 mm, insbesondere kleiner oder gleich 600 mm.

Diese Abstände haben sich in ersten Anwendungsversuchen des Prinzips der erfindungsgemäßen Vorrichtung als vorteilhaft herausgestellt und ermöglichen eine Anwendung in einer Vielzahl von Werkzeugmaschinen unterschiedlicher Tischgrößen und Arbeitsraumvolumina.

Eine vorteilhafte Weiterbildung der erfindungsgemäßen Vorrichtung besteht darin, dass die Vorrichtung zum Einsatz an einer vorbestimmten Werkzeugmaschine vorgesehen ist, wobei die Werkzeugmaschine eine steuerbare Linearachse aufweist und das Abstandselement einen vorgegebenen Abstand zwischen dem ersten und zweiten Messelement aufweist, der 30% bis 70%, insbesondere 40 bis 60% und insbesondere im Wesentlichen 50% der Achslänge der steuerbaren Linearachse beträgt.

Je nach Tischgröße und Achslänge der steuerbaren Linearachsen ist es sinnvoll, entsprechend längere oder kürzere Abstände zwischen den beiden Messelementen zu wählen. Dabei haben sich in Relation zu der Achslänge der steuerbaren Linearachsen bestimmte Abstände (z.B. rund 50% der Achslänge) als vorteilhaft herausgestellt, sodass eine an die Maschinengröße angepasste Größe der Vorrichtung für eine schnelle Aussage bezüglich der Genauigkeit der Werkzeugmaschine (Maschinengeometrie) bevorzugt Verwendung finden kann.

Sehr wohl können aber auch kleinere oder größere Abstände zwischen den beiden Messelementen für den entsprechenden Anwendungsfall vorteilhaft sein. Zum Beispiel können durchaus Abstände, die kleiner 50% der Achslänge der Werkzeugmaschine entsprechen, vorteilhaft sein. Ein mehrfaches Versetzen der Vorrichtung für das Vermessen der Werkzeugmaschine birgt dabei zwar einen höheren Aufwand, jedoch können damit deutlich mehr Messpunkte erfasst werden, auf Basis derer eine detailliertere und somit genauere Aussage bezüglich der Maschinengenauigkeit möglich wird.

Ein erfindungsgemäßes System umfasst eine numerisch gesteuerte Werkzeugmaschine und eine Vorrichtung zum Einsatz an der numerisch gesteuerten Werkzeugmaschine gemäß einem der vorgenannten Aspekte/Weiterbildungen.

Ein nicht beanspruchtes Verfahren zum Vermessen der numerisch gesteuerten Werkzeugmaschine hat die folgenden Schritte: Aufnehmen einer Messvorrichtung an der Arbeitsspindel der Werkzeugmaschine, Anbringen einer Vorrichtung gemäß einem der vorgenannten Weiterbildungen an einem linear und/oder rotatorisch verfahrbaren Maschinenteil der Werkzeugmaschine, Ermitteln einer jeweiligen Ist-Position des ersten Messelements mit dem Messtaster an mindestens zwei Positionen des Maschinenteils an der Werkzeugmaschine, Ermitteln einer jeweiligen Ist-Position des zweiten Messelements mit der Messvorrichtung an mindestens zwei Positionen des Maschinenteils an der Werkzeugmaschine, Bestimmen eines oder mehrerer Koordinatenbezugsparameter einer oder mehrerer steuerbarer Achsen der Werkzeugmaschine auf Basis der ermittelten Ist-Positionen der ersten und zweiten Messelemente an den mindestens zwei Positionen des Maschinenteils der Werkzeugmaschine, der jeweiligen Soll-Positionen der ersten und zweiten Messelemente an den mindestens zwei Positionen des Maschinenteils der Werkzeugmaschine und einem vorbekannten Abstand zwischen dem ersten und zweiten Messelement.

Hierbei kann für die Messvorrichtung ein Punktmesssystem verwendet werden, dass neben einem Messtaster als bevorzugte Messvorrichtung auch z.B. ein Laserpunktmesser oder ein Luftspaltmesser umfassen kann.

Wie dies bei Vermessungen mittels z.B. eines Messtasters und entsprechender Messelemente üblich ist, werden nacheinander mindestens zwei Positionen der Messelemente von dem Messtaster aufgenommen und dann mit den Positionen verglichen, die die Messelemente im Idealfall eingenommen haben sollten, wobei ferner in diesem Verfahren der Abstand der Messelemente (z.B. als Referenzwert) zueinander berücksichtigt wird. Dabei ist das hier vorgestellte Verfahren nicht darauf beschränkt, erst mehrere Positionen des ersten Messelements aufzunehmen, um danach die Vermessung mittels des zweiten Messelements zu starten. Vielmehr kann auch erst eine erste Position des ersten und zweiten Messelements aufgenommen werden, bevor die Vorrichtung mit dem entsprechenden Maschinenteil bewegt wird, um dann die Vermessung bei der zweiten Position des ersten oder zweiten Messelements weiterzuführen.

Ferner ist das Verfahren auch nicht darauf beschränkt, die zwei Messelemente in einer Ebene parallel zur Oberfläche des Maschinenteils anzuordnen, auf dem die Vorrichtung befestigt wurde. Falls die Vorrichtung über die vorgenannten Zwischenelemente verfügt, können auch bewusst Höhenversätze zwischen den Messelementen vorgesehen werden, um z.B. in einem Messzyklus alle fünf Achsen einer 5-Achs-Bearbeitungsmaschine zu vermessen.

Ein nicht beanspruchtes Verfahren zum Vermessen der numerisch gesteuerten Werkzeugmaschine hat die folgenden Schritte: Aufnehmen einer Messvorrichtung an der Arbeitsspindel der Werkzeugmaschine, Anbringen einer Vorrichtung gemäß einem der Ansprüche 1 bis 22 an einem linear und/oder rotatorisch verfahrbaren Maschinenteil der Werkzeugmaschine, Erfassen einer Umgebungstemperatur der Werkzeugmaschine, Ermitteln einer jeweiligen Ist-Position des ersten Messelements mit der Messvorrichtung an mindestens zwei Positionen des Maschinenteils an der Werkzeugmaschine in Bezug auf die erfasste Umgebungstemperatur der Werkzeugmaschine zum Zeitpunkt der ermittelten, jeweiligen Ist-Position des ersten Messelements, Ermitteln einer jeweiligen Ist-Position des zweiten Messelements mit der Messvorrichtung an mindestens zwei Positionen des Maschinenteils an der Werkzeugmaschine in Bezug auf die erfasste Umgebungstemperatur der Werkzeugmaschine zum Zeitpunkt der ermittelten, jeweiligen Ist-Position des zweiten Messelements, Abgleich der jeweiligen ermittelten Ist-Positionen der ersten und zweiten Messelemente in Bezug auf die jeweilige erfasste Umgebungstemperatur mit einer Referenztemperatur der Werkzeugmaschine, Bestimmen eines oder mehrerer Koordinatenbezugsparameter einer oder mehrerer steuerbarer Achsen der Werkzeugmaschine auf Basis der ermittelten Ist-Positionen der ersten und zweiten Messelemente an den mindestens zwei Positionen des Maschinenteils der Werkzeugmaschine in Bezug auf die Referenztemperatur der Werkzeugmaschine, der jeweiligen Soll-Positionen der ersten und zweiten Messelemente an den mindestens zwei Positionen des Maschinenteils der Werkzeugmaschine in Bezug auf die Referenztemperatur der Werkzeugmaschine und einem vorbekannten Abstand zwischen dem ersten und zweiten Messelement in Bezug auf die Referenztemperatur der Werkzeugmaschine.

Besonders bei der Messung von Absolut-Werten ist es entscheidend, einen Temperaturabgleich der Ist-Werte vorzunehmen, da ansonsten die ermittelten Ist-Werte nicht mit den Soll-Werten vergleichbar sind. Insbesondere, wenn die Temperaturänderungen (z.B. über den Tag hinweg in einer Maschinenhalle) sehr deutlich ausfallen, kann ein Temperaturabgleich unerlässlich für eine zuverlässige Bestimmung der Maschinengenauigkeit bzw. der Maschinenfehler sein.

Durch die Erweiterung des Verfahrens durch die Erfassung der Umgebungstemperatur zum Zeitpunkt der jeweiligen Ermittlung der Ist-Positionen kann eine Bereinigung von Temperatureinflüssen (Temperaturänderungen während der Messung etc.) der ermittelten Ist-Positionen stattfinden. Dies erfolgt, indem die ermittelten Positionen mit ihren jeweiligen erfassten Umgebungstemperaturen auf eine Referenztemperatur der Werkzeugmaschine abgeglichen werden. Somit ist ein Vergleich der Ist- und Soll-Positionen bei Temperaturänderungen während der Messung erst möglich, da die Soll-Positionen/Soll-Werte meist für eine bestimmte Temperatur, in dem Fall die Referenztemperatur, gelten.

Auch in dem hier beschriebenen Verfahren kann wieder für die Messvorrichtung ein Punktmesssystem verwendet werden, dass neben einem Messtaster als bevorzugte Messvorrichtung auch z.B. ein Laserpunktmesser oder ein Luftspaltmesser umfassen kann.

Ferner kann die Bereinigung der Temperatureinflüsse auch umgekehrt stattfinden, indem die Soll-Werte (in Bezug auf eine bestimmte Temperatur) mit der jeweilig vorherrschenden Umgebungstemperatur abgeglichen werden.

Durch die Verwendung der erfindungsgemäßen Vorrichtung zum Vermessen einer Werkzeugmaschine konnte auf einfache Weise eine Möglichkeit geschaffen werden, zuverlässig sämtliche Linear- und Rundachsen der Werkzeugmaschine noch feiner in einem Messzyklus zu vermessen und auf Basis dessen die Maschinenkinematik und zusätzlich die Grundgeometrie der Werkzeugmaschine zu kalibrieren, was sich wiederum in einer deutlichen Erhöhung der Maschinengenauigkeit bemerkbar machte.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Werkzeugmaschine mit Maschinenteil (hier Maschinentisch) mit einer darauf aufgebauten ersten Ausführungsform der Vorrichtung und der Arbeitsspindel mit Messtaster;
- Fig. 2: zeigt schematisch die Werkzeugmaschine mit Maschinenteil (hier Maschinentisch) mit einer darauf aufgebauten zweiten Ausführungsform der Vorrichtung und der Arbeitsspindel mit Messtaster;
- Fig. 3A: zeigt schematisch eine Werkzeugmaschine mit Maschinenteil (hier Maschinentisch) mit der darauf aufgebauten zweiten Ausführungsform der Vorrichtung und der Arbeitsspindel mit Messtaster;
- Fig. 3B: zeigt schematisch die Werkzeugmaschine nach Fig. 3A mit Maschinenteil (hier Maschinentisch) mit einer darauf aufgebauten zweiten Ausführungsform der Vorrichtung und einer versetzten Arbeitsspindel mit Messtaster;
- Fig. 4: zeigt schematisch die Werkzeugmaschine mit Maschinenteil (hier Maschinentisch) mit einer darauf aufgebauten dritten Ausführungsform der Vorrichtung und der Arbeitsspindel mit Messtaster;
- Fig. 5A: zeigt eine vierte Ausführungsform der Vorrichtung mit mehreren Messelementen entlang des Abstandselements;
- Fig. 5B: zeigt eine fünfte Ausführungsform der Vorrichtung mit einem kreuzförmigen Abstandselement, mehreren Messelementen (auch entlang von Abschnitten des kreuzförmigen Abstandselements) sowie einer Vier-Punkt-Befestigung der Vorrichtung;
- Fig. 6: zeigt ein Ablaufdiagramm eines Ausführungsbeispiels des nicht beanspruchten Verfahrens;
- Fig. 7: zeigt ein Ablaufdiagramm eines Ausführungsbeispiels des weiteren nicht beanspruchten Verfahrens;

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

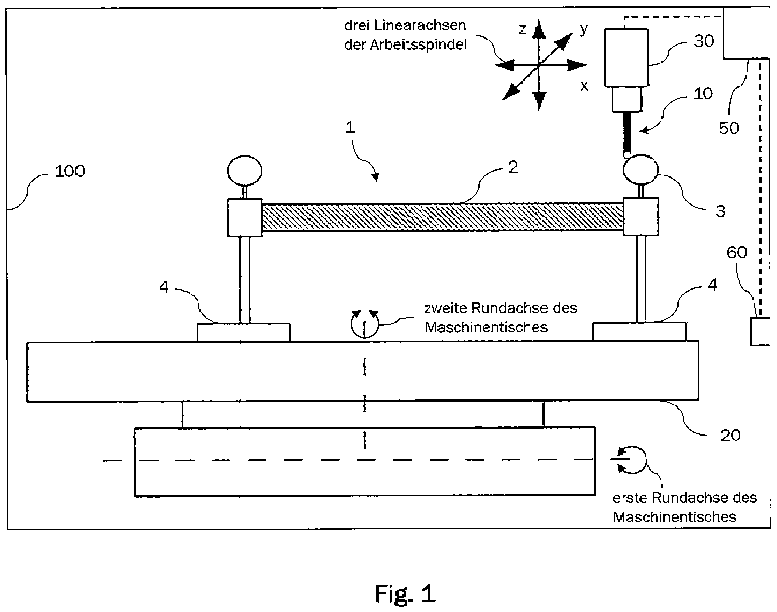

Fig. 1 zeigt schematisch eine Werkzeugmaschine 100 mit einem Maschinenteil 20 (hier Maschinentisch) mit einer darauf aufgebauten ersten Ausführungsform der Vorrichtung 1 und einer Arbeitsspindel 30 mit einem Messtaster 10.

Die Vorrichtung 1 (Messvorrichtung 1) weist dabei zwei Messelemente 3 auf, die jeweils an einem Ende eines Abstandselements 2 angebracht sind und fest mit dem Abstandselement 2 verbunden sind. Ferner weist die Vorrichtung in Fig. 1 zwei Befestigungselemente 4 auf, mittels dieser die Vorrichtung 1 auf dem Maschinenteil 20 fixiert werden kann.

Die Anordnung von Messkugeln (oder Messkugelabschnitten) der Messelemente 3 mit dem Abstandselement 2 muss nicht zwingend in einer Ebene erfolgen. Die Messkugeln der Messelemente 3 können auch, im Gegensatz wie in Fig. 1 gezeigt, um einen beliebigen Winkel, um die Längsachse des Abstandselements 2 herum, zueinander verdreht sein. Zusätzlich können die Messkugeln der Messelemente 3 entlang der in Fig. 1 dargestellten x-Achse von den Enden des Abstandselements 2 weiter nach innen, in Richtung des Abstandselements 2, oder weiter nach außen, in entgegengesetzter Richtung zum Abstandselement 2, mit Verbindung zu den jeweiligen Enden des Abstandselements 2 angeordnet sein. Dies gilt für die Messkugeln der Messelemente 3 analog in Bezug auf die y-Achse und z-Achse.

Messelemente 3 und Abstandselement 2 bilden durch eine starre Verbindung eine Einheit, die für die spätere Verwendung in der Vermessung der Werkzeugmaschine 100 für Referenzzwecke als eine Art "Längennormal" dienen soll. Ferner kann die starre Verbindung aber durch eine lösbare ersetzt werden, wenn zum Beispiel die Messelemente 3 sowie die Enden des Abstandselements 2 über mechanische Anschläge verfügen, die eine Lage der Messelemente 3 gegenüber dem Abstandselement 2 definieren. Dies kann vorteilhaft dazu verwendet werden, wenn z.B. die Messelemente 3 ausgetauscht werden müssen für anders ausgeformte Messelemente 3 oder anders ausgeformte Messkugeln/Messkugelabschnitte, wodurch aber ein erneutes Vermessen des Abstandes der Messelemente nicht zwingend notwendig sein muss.

Zudem ist der Werkstoff des Abstandselements 2 so ausgewählt, dass dieser einen sehr geringen Ausdehnungskoeffizienten gegenüber Temperaturänderungen aufweist. Geeignete Werkstoffe wären hierfür unter anderem Kohlenstofffaser oder Quarzglas, wobei der thermische Ausdehnungskoeffizient von einer Kohlenstofffaser bei ca. -0,1 × 10⁻⁶ 1/K und für Quarzglas bei ca. 0,54 × 10⁻⁶ 1/K liegt. Wobei auch andere Werkstoffe mit geringem thermischem Ausdehnungskoeffizienten für das Verwenden als Abstandselement geeignet sein können.

An den Enden des Abstandselements 2 (und wie in Fig. 1 dargestellt auch an den Messelementen 3) ist jeweils das Befestigungselement 4 vorgesehen, um die Vorrichtung 1 auf dem Maschinenteil 20 (hier Maschinentisch) zu befestigen. Dabei kann das Befestigungselement 4 einen Elektromagneten oder einen mechanisch schaltbaren Dauermagneten aufweisen, mittels diesem jedes Befestigungselement 4 auf einer Fläche des Maschinenteils 20 befestigt werden kann. Zudem ist es möglich, anstatt einer magnetischen Befestigungsmöglichkeit eine lösbare Klebeverbindung zwischen Vorrichtung 1 und Maschinenteil 20 zu verwenden. Weiterhin kann aber auch anstatt oder in Kombination mit der magnetischen Befestigung eine Klemmbefestigung vorgesehen werden, um die Vorrichtung 1 an dem Maschinenteil 20 zu fixieren.

Der in der Arbeitsspindel 30 der Werkzeugmaschine 100 aufgenommene Messtaster 10 kann die Messelemente 3 der Vorrichtung 1 (Messvorrichtung 1) bevorzugt taktil, also durch Berührung, erfassen. Ferner kann aber auch ein optisches Erfassen (z.B. mittels Laserpunktmesser) der Messelemente 3 stattfinden, um ihre jeweilige Position gegenüber einem Maschinenkoordinatensystem der Werkzeugmaschine 100 zu bestimmen. Ferner kann der Messtaster 10 die Berührung der Messelemente 3 z.B. kapazitiv oder induktiv, aber auch durch veränderliche elektrische Widerstände erfassen, wie dies z.B. bei Dehnmessstreifen genutzt wird.

Die Arbeitsspindel 30 der Werkzeugmaschine 100 kann nun dazu verwendet werden, den Messtaster 10 über die in Fig. 1 dargestellten Linearachsen in x-, y- und z-Richtung zu verfahren und damit die Messkugel/den Messkugelabschnitt der Messelemente 3 taktil zu erfassen. Durch den bekannten Radius der Messkugel/des Messkugelanschnitts des Messelements 3 kann nun der Mittelpunkt der Messkugel/des Messkugelanschnitts des Messelements 3 als Messpunkt verwendet werden. Es kann aber auch der Kontaktpunkt zwischen Messtaster 10 und Messelement 3 selbst als Messpunkt verwendet werden, da sehr wohl jede Messkugel/jeder Messkugelabschnitt selbst Formabweichungen von der idealen Kugel aufweist, die aber oftmals vernachlässigbar klein sind.

Dennoch kann mit mehreren Kontaktpunkten als Messpunkte pro Messelement 3 ein noch feineres Bild der Lage der Messelemente 3 und somit der Maschinenkinematik und Grundgeometrie der Werkzeugmaschine 100 erstellt werden. Dies kann sich wiederum für die evtl. anschließende Kalibrierung der Werkzeugmaschine 100 und für das Steigern der Maschinengenauigkeit als überaus hilfreich erweisen.

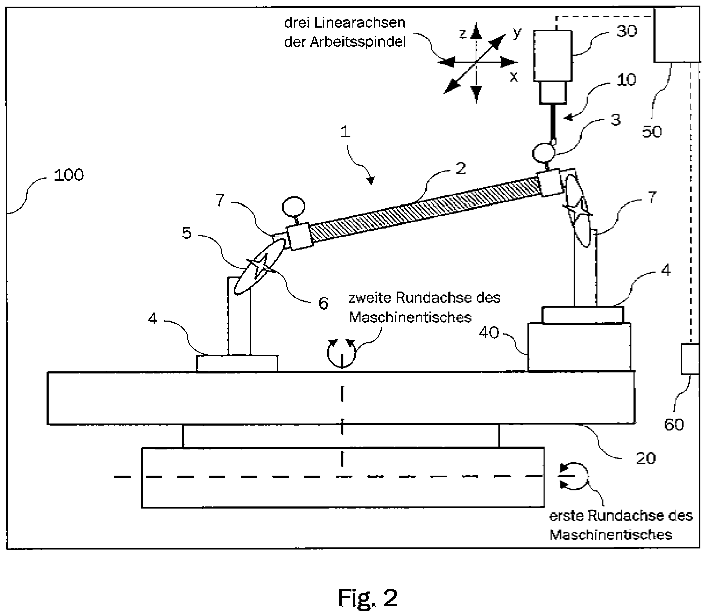

Zudem kann, wie in Fig. 1 dargestellt, der Maschinentisch als Maschinenteil 20 der Werkzeugmaschine 100 um eine erste und um eine zweite Rundachse herum bewegt werden. Dies ermöglicht, einen Höhenversatz der Messelemente 3 der Vorrichtung 1 zu erzeugen, ohne dabei auf eine flexible Positionierbarkeit der Vorrichtung 1 auf dem Maschinentisch oder auf ein extra Element (zum Beispiel Höhenelement 40; siehe Figuren 2 bis 3B) zum Einstellen des Höhenversatzes angewiesen zu sein. Auf Basis dessen können nun alle Achsen der Werkzeugmaschine 100 in einem Messzyklus vermessen werden.

Dabei kann es vorteilhaft sein, die Vorrichtung 1 (Messvorrichtung 1) bewusst nicht symmetrisch gegenüber dem Maschinentisch auf dem Maschinentisch zu positionieren. Vielmehr kann mit dem gewählten Abstand der Messelemente 3 versucht werden, möglichst unterschiedliche Positionen der Messelemente 3 gegenüber dem Maschinentisch zu erreichen, dabei aber immer den Abstand der Messelemente 3 möglichst konstant zu halten. Dies kann zum Beispiel für eine verbesserte Rückführbarkeit gemessener Maschinenfehler der Werkzeugmaschine 100 auf ihre jeweiligen Ursachen genutzt werden.

Generell weist die Werkzeugmaschine 100 eine hier nicht weiter spezifizierte Auswerteeinheit 50 auf, die die ermittelten Positionen der Messelemente 3 aufnimmt und gegebenenfalls verarbeitet. Zudem ist die Auswerteeinheit 50 generell mit einer Temperaturmesseinrichtung 60 verbunden, die dazu eingerichtet ist, Umgebungstemperaturen innerhalb und/oder außerhalb der Werkzeugmaschine 100 zu erfassen und die erfassten Werte an die Auswerteeinheit 50 für eine eventuelle Berücksichtigung bei den ermittelten Positionswerten zu senden.

Es sei darauf hingewiesen, dass die Aufteilung der Linear- und Rundachsen wie in Fig. 1 gezeigt nicht darauf beschränkt ist, dass die Arbeitsspindel 30 entlang aller drei Linearachsen (Li, L₂, L₃) verfahren werden kann und der Maschinentisch lediglich um die zwei Rundachsen (Ri, R₂) verdreht werden kann. Eine Verteilung der steuerbaren Achsen kann z.B. auch so erfolgen, dass die Arbeitsspindel 30 über zwei Linearachsen und eine Rundachse (senkrecht zur Arbeitsachse der Arbeitsspindel 30) verfügt und der Maschinentisch dafür über eine Linear- und eine Rundachse verfügt. Diverse weitere Ausgestaltungsmöglichkeiten dieser Aufteilung oder eine eventuelle Erhöhung der Anzahl an steuerbaren Verfahr- und Bewegungsachsen der Werkzeugmaschine 100 sollen hiermit berücksichtigt sein.

Fig. 2 zeigt schematisch die Werkzeugmaschine 100 mit dem Maschinenteil 20 (hier Maschinentisch) mit einer darauf aufgebauten zweiten Ausführungsform der Vorrichtung 1 und der Arbeitsspindel 30 mit dem Messtaster 10.

Dabei verfügt die Vorrichtung 1 in Fig. 2 gegenüber der Vorrichtung 1 in Fig. 1 ferner über zwei Zwischenelemente 5, wobei jedes Zwischenelement 5 über ein der zwei Gelenke 7 mit dem Befestigungselement 4 und über das andere der zwei Gelenke 7 mit dem Messelement 3 verbunden ist. Die Gelenke 7 können dabei über einen rotatorischen Freiheitsgrad verfügen, wie dies bei einem einfachen Drehgelenk der Fall ist, oder aber auch über eine Vielzahl von rotatorischen Freiheitsgraden verfügen, wie zum Beispiel bei einem Kugelgelenk oder einem Kreuzgelenk.

Jedes der Zwischenelemente 5 verfügt zusätzlich über eine Arretiereinrichtung 6, die dazu genutzt werden kann, nach erfolgter Befestigung der Befestigungselemente 4 auf dem Maschinenteil 20 und erfolgter Ausrichtung der Messelemente 3 zusammen mit dem Abstandselement 2 die Position von Messelementen 3 und Abstandselement 2 gegenüber dem Befestigungselement 4 bzw. dem Maschinenteil 20 zu fixieren. Hierbei können zum Beispiel die verwendeten Gelenke 7 der Zwischenelemente 5 geklemmt oder eine Bewegung der Gelenke 7 anderweitig verhindert werden. Für eine Klemmung der Gelenke 7 kann sich zum Beispiel eine Verspannung der Gelenk-tragenden Bereiche der Zwischenelemente 5 mittels eines Schraubengetriebes als Arretiereinrichtung 6 eignen. Aber auch andere Möglichkeiten können dafür in Betracht gezogen werden, wie zum Beispiel eine Schnellspannvorrichtung, wie sie z.B. bei Fahrrädern genutzt wird.

Ferner kann durch die Verwendung der Vorrichtung 1 nach dem Ausführungsbeispiel in Fig. 2 ein Höhenversatz (hier in z-Richtung) zum Beispiel durch ein Erhöhungselement 40 bewusst erzeugt werden. Durch den Höhenversatz können zum Beispiel mit einem Messzyklus alle 5 Achsen der Werkzeugmaschine 100 vermessen werden und ein Umspannen oder Versetzen der Vorrichtung 1, um alle Achsen der Werkzeugmaschine 100 zu erfassen, kann dadurch entfallen.

Jedoch kann das Erhöhungselement 40 auch ein zu bearbeitendes Werkstück sein, was zusammen mit der Werkzeugmaschine 100 vermessen wird. Dies ist besonders dann von Vorteil, wenn Werkstücke mit einem hohen Gewicht mit einer hohen Präzision gefertigt/bearbeitet werden müssen. Hierfür ist es vorteilhaft, im Vorfeld des eigentlichen Bearbeitungsprozesses z.B. den Bewegungsablauf des Maschinentisches, auf dem das Werkstück eingespannt ist, mit dem Werkstück zu vermessen und die dadurch ermittelten Fehler (z.B. in den Führungen des Maschinentisches) zu erfassen und bei der Bearbeitung zu berücksichtigen. Dies kann z.B. durch eine Kompensation, also der Korrektur der Soll-Positionswerte, des Maschinentisches erfolgen, um die Genauigkeit der Bearbeitung des Werkstücks deutlich zu erhöhen.

Auf die Beschreibung der Auswerteeinheit 50, der Temperaturmesseinrichtung 60 und der Linear- und Rundachsen (Li, L₂, L₃, R₁, R₂) wird aus Gründen der Vermeidung unnötiger Wiederholungen hiermit auf Fig. 1 verwiesen.

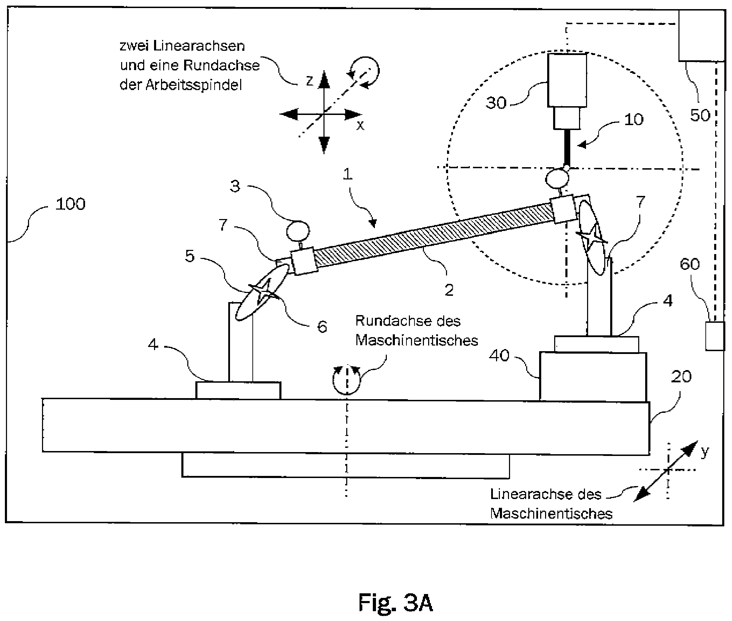

Fig. 3A zeigt schematisch eine Werkzeugmaschine 100 mit Maschinenteil 20 (hier Maschinentisch) mit der darauf aufgebauten zweiten Ausführungsform der Vorrichtung 1 und der Arbeitsspindel 30 mit Messtaster 10.

Der Unterschied zu dem Aufbau wie in Fig. 2 gezeigt liegt darin, dass die Werkzeugmaschine 100 nun über eine andere Konfiguration verfügt als die Werkzeugmaschine 100 in den Figuren 1 und 2.

Die Arbeitsspindel 30 der hier gezeigten Werkzeugmaschine 100 besitzt nun zwei Linearachsen (hier in x- und z-Richtung) und eine Rundachse (zusammen L₁, L₂, R₃), die die Arbeitsspindel 30 um die y-Achse herum drehbar macht. Ferner verfügt der Maschinentisch (als Maschinenteil 20) nun über eine Linearachse (y-Richtung; L₃) und eine Rundachse (R₂), mit der der Maschinentisch um die z-Achse herum gedreht werden kann. Ferner liegt die Spitze eines Werkzeugs, in diesem Fall die Spitze des Messtasters 10, wie üblich bei solch konfigurierten Werkzeugmaschinen 100, in der Drehachse der Rundachse der Arbeitsspindel 30, was in Fig. 3A durch den Mittelpunkt des Kreises um die Arbeitsspindel 30 verdeutlicht sein soll.

Das besondere bei dieser Konfiguration der Werkzeugmaschine 100 ist, dass bei der Positionierung der Messelemente 3 der Vorrichtung 1 ohne Höhenversatz (wie in Fig. 1 gezeigt) die Linearachse in z-Richtung nicht in dem gleichen Zyklus vermessen werden könnte, wie die anderen Achsen. Durch den Aufbau der Vorrichtung 1 mit den Zwischenelementen 5, wie in Fig. 2 und 3A gezeigt, ist der Messaufbau aber derart flexibel, dass ein Höhenversatz für die Vermessung der Linearachse in z-Richtung vorgesehen werden kann. Dieser kann durch die Verwendung des Höhenelements 40 (oder des Werkstücks) zusätzlich verstärkt werden, um den Bewegungsbereich, den die Linearachse in z-Richtung verfahren muss, zu vergrößern.

Auf die Beschreibung der Auswerteeinheit 50 und der Temperaturmesseinrichtung 60 wird aus Gründen der Vermeidung unnötiger Wiederholungen hiermit auf Fig. 1 verwiesen.

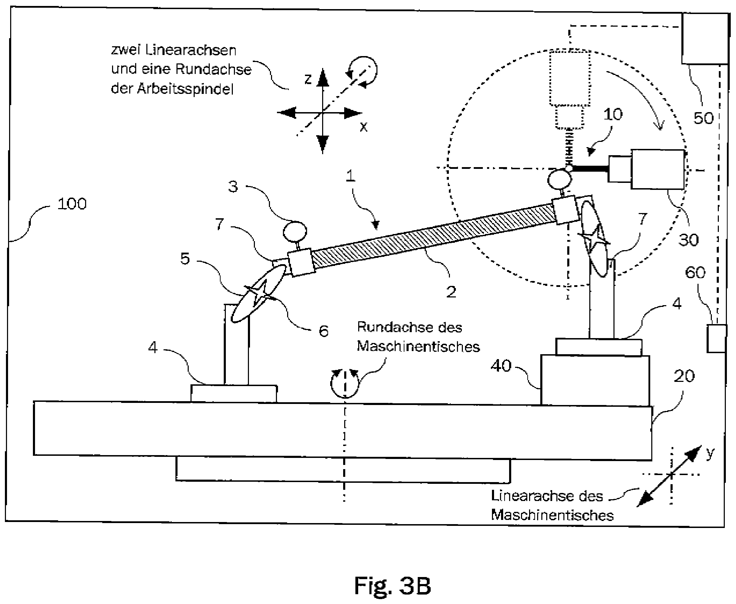

Fig. 3B zeigt schematisch die Werkzeugmaschine 100 nach Fig. 3A mit Maschinenteil 20 (hier Maschinentisch) mit der darauf aufgebauten zweiten Ausführungsform der Vorrichtung 1 und einer versetzten Arbeitsspindel 30 mit Messtaster 10.

In Fig. 3B soll nun einmal die Verlagerung der Arbeitsspindel 30 der Werkzeugmaschine 100 von einer senkrechten Position in eine waagerechte Position gezeigt sein und wie die Spitze des Messtasters 10 in ihrer Position verbleibt. Dies macht noch einmal die Notwendigkeit eines Höhenversatzes deutlich, um ein erneutes Positionieren der Vorrichtung 1 in eine veränderte Position gegenüber des Maschinentisches zu vermeiden.

Auf die Beschreibung der Auswerteeinheit 50, der Temperaturmesseinrichtung 60 und der Linear- und Rundachsen (L₁, L₂, R₃, L₃, R₂) wird aus Gründen der Vermeidung unnötiger Wiederholungen hiermit auf Fig. 1 verwiesen.

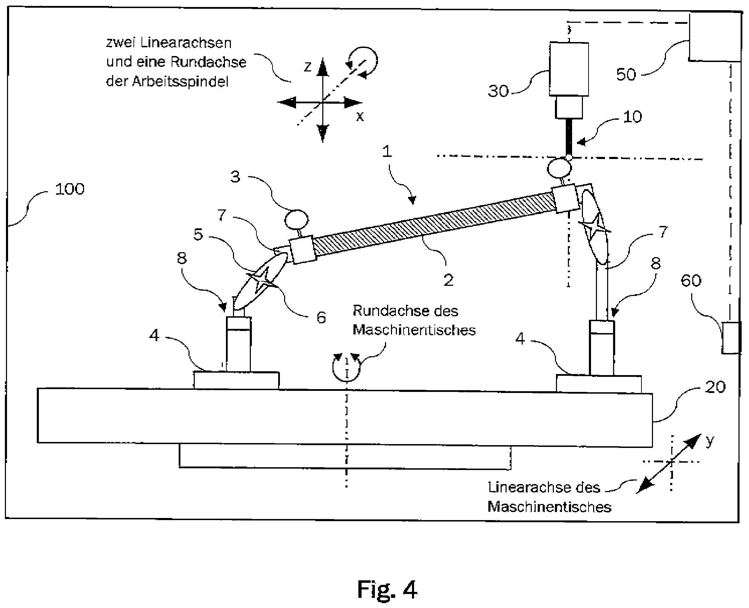

Fig. 4 zeigt schematisch die Werkzeugmaschine 100 mit Maschinenteil 20 (hier Maschinentisch) mit einer darauf aufgebauten dritten Ausführungsform der Vorrichtung 1 und der Arbeitsspindel 30 mit Messtaster 10.

Die hier gezeigte Ausführungsform der Vorrichtung 1 unterscheidet sich zu der in den Figuren 3A und 3B gezeigten Vorrichtung 1 durch Vorsehen einer teleskopartigen Verstelleinrichtung 8, mittels dieser in Stufen oder stufenlos der Abstand zwischen dem jeweiligen Messelement 3 und dem Maschinenteil 20 in einem bestimmten Bereich eingestellt werden kann.

Dabei kann bei der teleskopartigen Verstelleinrichtung 8 der Abstand zum Maschinenteil 20 klemmend gehalten werden (z.B. mittels Überwurfmutter oder eines Schnellspanners), oder das Befestigungselement 4 ist mit einem Gewinde versehen und kann in das Messelement 3 hinein- oder herausgeschraubt werden, sodass ein Abstand zwischen Befestigungselement 4 und Messelement 3 vergrößert oder verringert werden kann. Auch ist ein stufenförmiges Verstellen des Abstandes z.B. mittels eines Einrastmechanismus möglich.

Auf die Beschreibung der Auswerteeinheit 50, der Temperaturmesseinrichtung 60 und der Linear- und Rundachsen (Li, L₂, R₃, L₃, R₂) wird aus Gründen der Vermeidung unnötiger Wiederholungen hiermit auf Fig. 1 verwiesen.

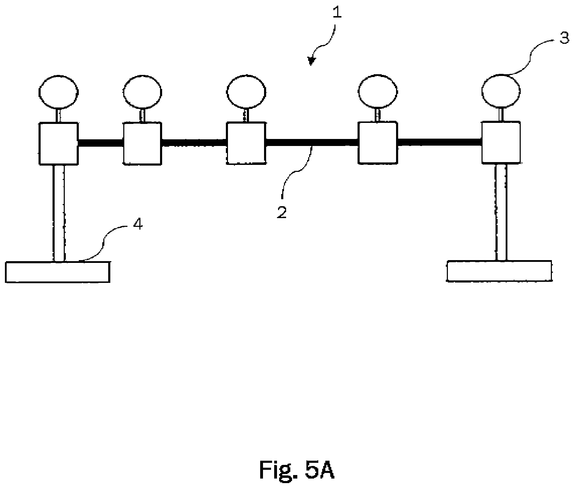

Fig. 5A zeigt eine vierte Ausführungsform der Vorrichtung 1 mit mehreren Messelementen 3 entlang des Abstandselements 2 in schematischer Darstellung.

Die hier gezeigte Vorrichtung 1 weist nunmehr nicht nur jeweils ein Messelement 3 an den beiden Enden des Abstandselements 2 auf, sondern weist zudem weitere, entlang des Abstandselements 2 angebrachte Messelemente 3 auf. Dabei ist die Anzahl der zusätzlichen Messelemente 3 in keinster Weise auf die gezeigte Anzahl beschränkt, genauso wenig wie die Aufteilung der zusätzlichen Messelemente 3 auf der Länge des Abstandselements 2. Die Abstände der Messelemente 3 zueinander können vorher festgelegt werden oder im Vorfeld der Vermessung der Werkzeugmaschine 100 ausgemessen werden.

Vorteilhafterweise kann dadurch eine deutlich höhere Anzahl an Messpunkten pro Messzyklus erfasst werden, die die Vermessung und anschließende Korrektur der Maschinengeometrie erheblich verbessern können. Zudem kann die Verteilung der Messelemente 3 auf der Länge des Abstandselements 2 sehr flexibel stattfinden, um z.B. Bereiche, die einer detaillierteren Erfassung ihrer Positionsänderung bedürfen, mit mehr Messelementen 3 zu versehen. Auf dem Maschinenteil 20 als Maschinentisch können das zum Beispiel Bereiche mit einer größeren Distanz zum Drehpunkt des Maschinentisches sein.

Die Vorrichtung 1 kann dabei auch um die in Fig. 4 beschriebene teleskopartige Verstelleinrichtung 8 erweitert und/oder um die in Fig. 2 beschriebenen Zwischenelemente 5, die Arretiereinrichtung 6 und/oder die Gelenke 7 erweitert werden, auch wenn diese nicht explizit in der Fig. 5A gezeigt sind.

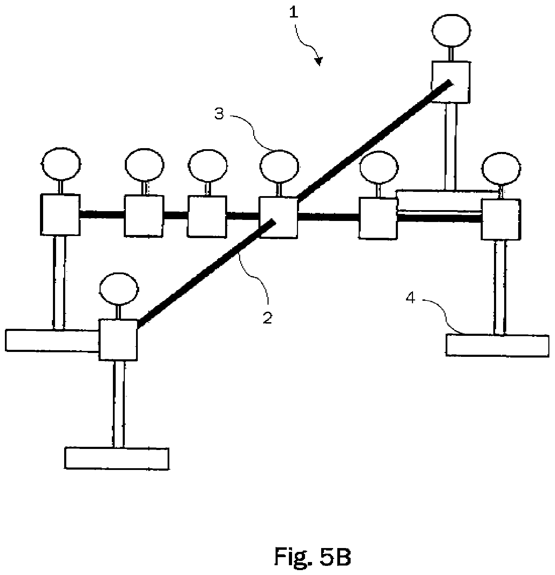

Fig. 5B zeigt eine fünfte Ausführungsform der Vorrichtung 1 mit einem kreuzförmigen Abstandselement 2, mehreren Messelementen 3 (auch entlang von Abschnitten des kreuzförmigen Abstandselements 2) sowie einer Vier-Punkt-Befestigung der Vorrichtung 1 in schematischer Darstellung.

Vorteilhaft kann es zudem sein, das Abstandselement 2 nicht als rein stabförmiges Element auszuführen, sondern dieses als kreuzförmiges Element zu gestalten. Hierdurch entstehen weitere Möglichkeiten der Bestückung des Abstandselements 2 mit Messelementen 3, die wiederum auf bestimmte Bedürfnisse der Vermessung der Werkzeugmaschine 100 angepasst sein können. Auch hierdurch kann eine deutlich höhere Anzahl an Messpunkten pro Messzyklus erfasst werden, die wiederum die Vermessung und anschließende Korrektur der Maschinengeometrie im erheblichen Maße verbessern können.

Zusätzlich können durch die zwei Raumrichtungen, entlang dieser sich das kreuzförmige Abstandselement 2 erstreckt, auch z.B. überlagerte Ungenauigkeiten erfasst werden. Zum Beispiel bei einer Rundachse des Maschinenteils 20. Hier können bei Drehung der Rundachse nicht nur Achsfehler/Achsfehlstellungen in radialer Richtung erfasst werden, sondern parallel dazu auch ein Verkippen der Rundachse erfasst werden. Dies spart Zeit und zeigt in kürzester Zeit Ungenauigkeiten auf, die sonst eventuell nur durch häufigeres Messen und Versetzen der Vorrichtung 1 erfasst worden wären.

Dabei ist auch hier wieder die Anzahl der Messelemente 3 in keinster Weise auf die gezeigte Anzahl beschränkt, genauso wenig wie die Aufteilung der zusätzlichen Messelemente 3 auf der Länge der stabförmigen Bereiche des kreuzförmigen Abstandselements 2.

Zudem muss auch nicht zwingend ein Messelement 3 in dem sich kreuzenden Punkt der stabförmigen Abschnitte des kreuzförmigen Abstandselements 2 vorgesehen sein. Die stabförmigen Abschnitte können zudem durch ein Verbindungselement miteinander verbunden sein oder aber das kreuzförmige Abstandselement 2 ist einstückig ausgebildet.

Die Vorrichtung 1 kann ferner auch um die in Fig. 4 beschriebene teleskopartige Verstelleinrichtung 8 erweitert und/oder um die in Fig. 2 beschriebenen Zwischenelemente 5, die Arretiereinrichtung 6 und/oder die Gelenke 7 erweitert werden, auch wenn diese nicht explizit in der Fig. 5B gezeigt sind.

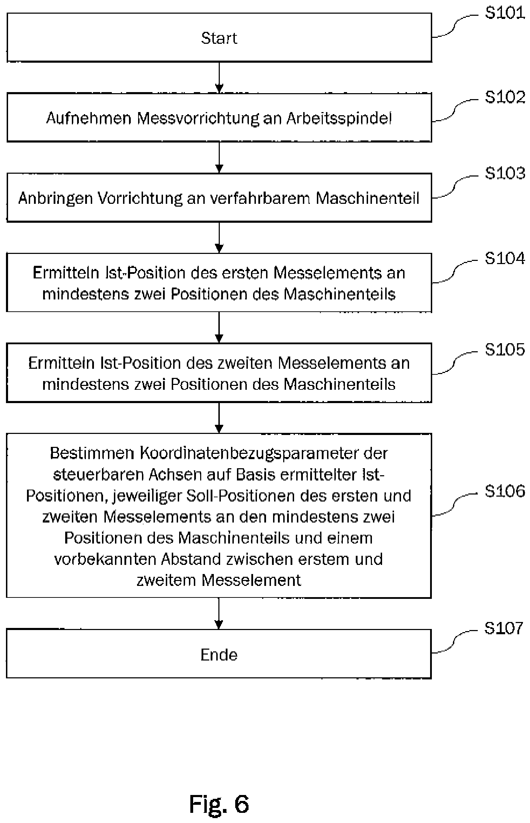

Fig. 6 zeigt ein Ablaufdiagramm eines Ausführungsbeispiels des nicht beanspruchten Verfahrens.

Im nicht beanspruchten Verfahren wird zu Beginn des Verfahrens im Schritt S102 der Messtaster 10 in die Arbeitsspindel 30 der Werkzeugmaschine 100 aufgenommen und in Betrieb genommen. Dabei können im Anschluss daran weitere Teilschritte erfolgen, um den Messtaster 10 mit einer hier nicht weiter spezifizierten Auswerteeinheit 50 zu verbinden und auf das in der Werkzeugmaschine 100 vorhandene Maschinenkoordinatensystem einzurichten.

Im nächsten Schritt S103 wird die Vorrichtung 1 auf dem Maschinenteil 20, das entsprechend verfahrbar entlang diverser Längsachsen und/oder diverser Rundachsen sein kann, mittels der Befestigungselemente 4 befestigt. Zusätzlich kann dabei, wie in Fig. 2 gezeigt, ein Erhöhungselement 40 für das bewusste Erzeugen eines Höhenversatzes der Messelemente 3 der Vorrichtung Anwendung finden. Überdies hinaus kann anstatt oder in Kombination mit dem Erhöhungselement 40 ein zu bearbeitendes Werkstück, das bereits auf dem Maschinentisch (als Maschinenteil 20) der Werkzeugmaschine 100 eingespannt ist, verwendet werden, an dem die Vorrichtung 1 befestigt werden kann.

Im darauf folgenden Schritt S104 werden mittels des Messtasters 10 die Positionskoordinaten (Ist-Position) eines ersten der Messelemente 3 der Vorrichtung 1 an einer ersten Position des Maschinenteils 20 ermittelt. Nachdem die Position des Maschinenteils 20 durch das Verfahren mindestens einer steuerbaren Achse (von z.B. drei Linearachsen und zwei Rundachsen) der Werkzeugmaschine 100 in eine zweite Position verändert wurde, werden erneut die Positionskoordinaten (Ist-Position) des ersten Messelements 3 durch den Messtaster 10 ermittelt. Die Anzahl an Positionen, die das Maschinenteil 20 einnimmt ist dabei nicht auf 2 Positionen beschränkt, sondern kann beliebig erhöht werden, genauso wie die Anzahl von Kontakten (Berührungspunkten) des Messtasters 10 mit dem ersten oder eines jeden anderen Messelements 3 pro Position des Maschinenteils 20.

In Schritt S105 erfolgt analog zu Schritt S104 die Ermittlung von den Positionskoordinaten (Ist-Position) eines zweiten Messelements 3 der Vorrichtung 1 an mindestens zwei Positionen des Maschinenteils 20.

Das Verfahren kann aber auch in der Art abgeändert werden, dass die Positionskoordinaten (Ist-Position) des ersten Messelements 3 durch den Messtaster 10 an der ersten Position des Maschinenteils 20 ermittelt werden und im Anschluss daran, ohne die Position des Maschinenteils 20 zu verändern, die Positionskoordinaten (Ist-Position) des zweiten Messelements 3 durch den Messtaster 10 ermittelt werden, bevor das Maschinenteil 20 in die zweite Position verfahren wird.

Im nächsten Schritt S106 werden nun ein oder mehrere Bezugsparameter (Koordinatenbezugsparameter) zum Maschinenkoordinatensystem der Werkzeugmaschine 100 von mindestens der einen der steuerbaren Achsen der Werkzeugmaschine 100 bestimmt. Dies erfolgt, indem die ermittelten Positionskoordinaten (Ist-Positionen) des ersten und zweiten Messelements 3 an den mindestens zwei Positionen des Maschinenteils 20, sowie die jeweiligen Soll-Positionen des ersten und zweiten Messelements 3 an den mindestens zwei Positionen des Maschinenteils 20, und ein vorher bekannter Abstand zwischen dem ersten und dem zweiten Messelement 3 ausgewertet werden.

Durch die Bezugsparameter kann nun die entsprechende steuerbare Achse der Werkezugmaschine 100 durch z.B. Kompensation kalibriert werden. Ferner kann die Auswertung aber auch darüber Aufschluss geben, ob eine Kompensation der Fehler in der entsprechenden Achse der Werkzeugmaschine 100 sinnvoll bzw. überhaupt möglich ist. Ist eine Kompensation der Fehler der steuerbaren Achse nicht mehr möglich, so können die Bezugsparameter bzw. die sich daraus ergebenden Abweichungen zur idealen Achse verwendet werden, um die entsprechende steuerbare Achse zu justieren oder anderweitig zu kalibrieren.

Vorteilhafterweise kann mit der Auswertung auch eine Klassifizierung der Werkzeugmaschine 100 stattfinden. Damit kann im Verlauf einer Bearbeitungskette eines Werkstücks schnell entschieden werden, auf welcher Werkzeugmaschine 100, abhängig von der für das Werkstück geforderten Genauigkeit/von den für das Werkstück geforderten Toleranzwerten, die entsprechenden Bearbeitungsschritte ausgeführt werden sollen/können.

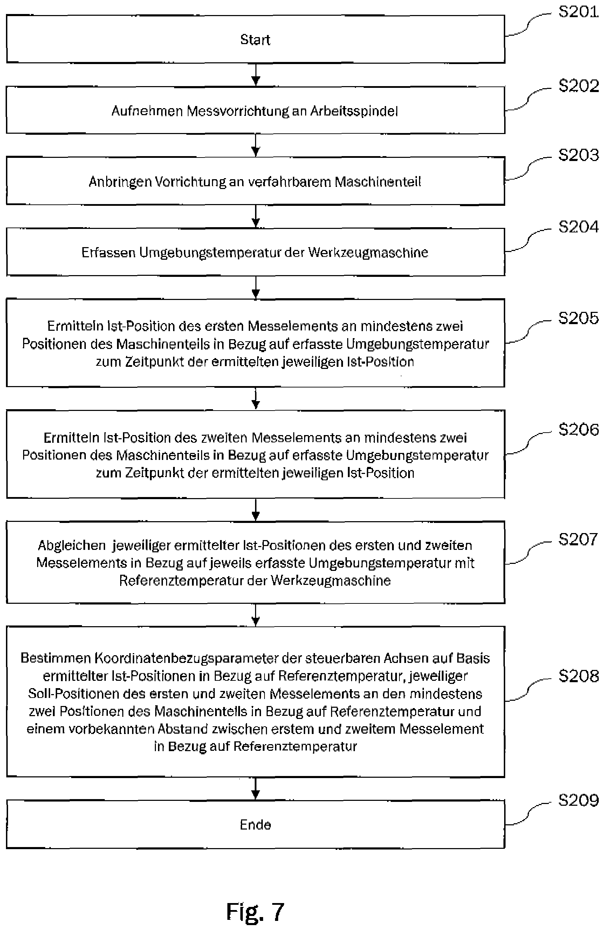

Fig. 7 zeigt ein Ablaufdiagramm eines Ausführungsbeispiels des weiteren nicht beanspruchten Verfahrens.

Die Schritte S201 bis S203 des weiteren nicht beanspruchten Verfahrens sind dabei identisch mit den Schritten S101 bis S103 des vorherigen nicht beanspruchten Verfahrens.

In Schritt S204 wird nun die Umgebungstemperatur erfasst. Dies kann zum Beispiel durch eine oder mehrere Temperaturmesseinrichtungen 60 innerhalb und/oder außerhalb der Werkzeugmaschine 100 erfolgen. Die erfassten Temperaturwerte werden an eine hier nicht weiter spezifizierte Auswerteeinheit 50 gesendet und in dieser verarbeitet.

Im darauf folgenden Schritt S205 werden mittels des Messtasters 10 die Positionskoordinaten (Ist-Position) eines ersten der Messelemente 3 der Vorrichtung 1 an einer ersten Position des Maschinenteils 20 ermittelt. Nachdem die Position des Maschinenteils 20 durch das Verfahren mindestens einer steuerbaren Achse (von z.B. drei Linearachsen und zwei Rundachsen) der Werkzeugmaschine 100 in eine zweite Position verändert wurde, werden erneut die Positionskoordinaten (Ist-Position) des ersten Messelements 3 durch den Messtaster 10 ermittelt. Das Ermitteln der Ist-Positionen des ersten Messelements 3 erfolgt dabei in Bezug auf die zu diesem Zeitpunkt gemessenen Umgebungstemperaturen.

Die Anzahl an Positionen, die das Maschinenteil 20 einnimmt, ist dabei nicht auf 2 Positionen beschränkt, sondern kann beliebig erhöht werden, genauso wie die Anzahl von Kontakten (Berührungspunkten) des Messtasters 10 mit dem ersten oder eines jeden anderen Messelements 3 pro Position des Maschinenteils 20.

In Schritt S206 erfolgt analog zu Schritt S205 die Ermittlung von den Positionskoordinaten (Ist-Position) eines zweiten Messelements 3 der Vorrichtung 1 an mindestens zwei Positionen des Maschinenteils 20 in Bezug auf die zu diesem Zeitpunkt gemessenen Umgebungstemperaturen.

In Schritt S207 erfolgt nun der Abgleich der ermittelten Ist-Positionen (Ist-Werte) in Bezug auf die zu dem Zeitpunkt erfassten Temperaturwerte mit einer Referenztemperatur der Werkzeugmaschine 100. Dies gewährleistet, dass alle Werte, auch die der Soll-Positionen/Soll-Werte, für ein und dieselbe Temperatur gelten. Nur so ist ein Vergleich der Ist-Positionen mit den entsprechenden Soll-Positionen und eine möglichst genaue Bestimmung der Abweichungen/Fehler möglich.

In Schritt S208 werden nun ein oder mehrere Bezugsparameter (Koordinatenbezugsparameter) zum Maschinenkoordinatensystem der Werkzeugmaschine 100 von mindestens der einen der steuerbaren Achsen der Werkzeugmaschine 100 bestimmt. Dies erfolgt, indem die ermittelten Positionskoordinaten (Ist-Positionen) des ersten und zweiten Messelements 3 an den mindestens zwei Positionen des Maschinenteils 20 in Bezug auf die Referenztemperatur der Werkzeugmaschine 100, sowie die jeweiligen Soll-Positionen des ersten und zweiten Messelements 3 an den mindestens zwei Positionen des Maschinenteils 20 in Bezug auf die Referenztemperatur der Werkzeugmaschine 100, und ein vorher bekannter Abstand zwischen dem ersten und dem zweiten Messelement 3 in Bezug auf die Referenztemperatur der Werkzeugmaschine 100 ausgewertet werden.

Durch die Bezugsparameter kann nun die entsprechende steuerbare Achse der Werkezugmaschine 100 durch z.B. Kompensation kalibriert werden. Ferner kann die Auswertung aber auch darüber Aufschluss geben, ob eine Kompensation der Fehler in der entsprechenden Achse der Werkzeugmaschine 100 sinnvoll bzw. überhaupt möglich ist. Ist eine Kompensation der Fehler der steuerbaren Achse nicht mehr möglich, so können die Bezugsparameter bzw. die sich daraus ergebenden Abweichungen zur idealen Achse verwendet werden, um die entsprechende steuerbare Achse zu justieren oder anderweitig zu kalibrieren.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

### LISTE DER BEZUGSZEICHEN

- 1: Vorrichtung/Messvorrichtung
- 2: Abstandselement
- 3: Messelement
- 4: Befestigungselement/Befestigungsabschnitt
- 5: Zwischenelement
- 6: Arretiereinrichtung
- 7: Gelenk
- 8: teleskopartige Verstelleinrichtung
- 10: Messtaster
- 20: Maschinenteil
- 30: Arbeitsspindel
- 40: Erhöhungselement
- 50: Auswerteeinheit
- 60: Temperaturmesseinrichtung
- 100: Werkzeugmaschine

## Patentansprüche

1. Vorrichtung (1) zum Einsatz an einer numerisch gesteuerten Werkzeugmaschine (100) zur Verwendung in einem Verfahren zum Vermessen der numerisch gesteuerten Werkzeugmaschine, mit:
- einem ersten Messelement (3) zur Vermessung durch eine Messvorrichtung,
- einem zweiten Messelement (3) zur Vermessung durch die Messvorrichtung,
- einem Abstandselement, an dem das erste Messelement und das zweite Messelement voneinander beabstandet angeordnet sind, und
- einem ersten Befestigungselement (4) mit einem ersten Befestigungsabschnitt zur Befestigung der Vorrichtung an dem Maschinenteil (20) der Werkzeugmaschine und einem zweiten Befestigungselement (4) mit einem zweiten Befestigungsabschnitt zur Befestigung an dem Maschinenteil der Werkzeugmaschine,
wobei das erste Befestigungselement und das zweite Befestigungselement voneinander beabstandet an dem Abstandselement angeordnet sind,
**dadurch gekennzeichnet, dass**
das erste und zweite Befestigungselement jeweils über eine arretierbare Verbindung an dem Abstandselement und/oder an einem jeweiligen der Messelemente befestigt sind, wobei es die arretierbare Verbindung ermöglicht, die Befestigungselemente an dem Maschinenteil zu fixieren, während die Lage von Abstandselement und/oder Messelement gegenüber der Befestigungselemente noch veränderbar ist.

2. Vorrichtung gemäß Anspruch 1, **dadurch gekennzeichnet, dass**
das erste und zweite Messelement jeweils über eine starre Verbindung an dem Abstandselement befestigt sind.

3. Vorrichtung gemäß einem der vorstehenden Ansprüche, **dadurch gekennzeichnet, dass**
das Abstandselement einen zwischen dem ersten und zweiten Messelement angeordneten Abschnitt aufweist, der aus einem Material ausgebildet ist, das einen thermischen Ausdehnungskoeffizienten kleiner oder gleich 3,0 · 10⁻⁶ K-1 aufweist, oder
das Abstandselement einen zwischen dem ersten und zweiten Messelement angeordneten Abschnitt aufweist, der aus einem Material ausgebildet ist, das in Abstandsrichtung zwischen dem ersten und zweiten Messelement einen thermischen Ausdehnungskoeffizienten kleiner oder gleich 30 · 10-6 K-1 aufweist.

4. Vorrichtung gemäß Anspruch 1 oder 2, **dadurch gekennzeichnet, dass**
das Abstandselement ein Material aufweist, das zumindest zwischen dem ersten und zweiten Messelement einen thermischen Ausdehnungskoeffizienten kleiner oder gleich 3,0 · 10-6 K-1 aufweist, oder
das Abstandselement ein Material aufweist, das zumindest zwischen dem ersten und zweiten Messelement in Abstandsrichtung zwischen dem ersten und zweiten Messelement einen thermischen Ausdehnungskoeffizienten kleiner oder gleich 3,0 · 10-6 K-1 aufweist.

5. Vorrichtung gemäß einem der vorstehenden Ansprüche, **dadurch gekennzeichnet, dass**
das Abstandselement einen zwischen dem ersten und zweiten Messelement angeordneten Abschnitt aufweist, der aus einem kohlefaserverstärktem Kunststoff ausgebildet ist, oder
das Abstandselement aus einem kohlefaserverstärktem Kunststoff ausgebildet ist, und
das Abstandselement als Kohlefaserstab ausgebildet ist

6. Vorrichtung gemäß einem der Ansprüche 1 bis 4, **dadurch gekennzeichnet, dass**
das Abstandselement einen zwischen dem ersten und zweiten Messelement angeordneten Abschnitt aufweist, der aus Quarzglas ausgebildet ist, oder
das Abstandselement aus einem Quarzglas ausgebildet ist, und
das Abstandselement als Quarzglasstab ausgebildet ist

7. Vorrichtung gemäß einem der vorstehenden Ansprüche, **dadurch gekennzeichnet, dass**
das erste und/oder das zweite Messelement eine Messkugel ist oder zumindest einen Messkugelabschnitt aufweist.

8. Vorrichtung gemäß einem der Ansprüche 1 bis 7, **dadurch gekennzeichnet, dass**
das erste und/oder zweite Befestigungselement in nicht arretiertem Zustand der arretierbaren Verbindung relativ zu dem Abstandselement schwenkbar und/oder frei rotierbar ist.

9. Vorrichtung gemäß einem der Ansprüche 1 bis 8, **dadurch gekennzeichnet, dass**
die arretierbare Verbindung des ersten und/oder zweiten Befestigungselements eine oder mehrere Gelenke, insbesondere Dreh- und/oder Kugelgelenke aufweist.

10. Vorrichtung gemäß einem der Ansprüche 1 bis 9, **dadurch gekennzeichnet, dass**
das erste Befestigungselement über ein erstes Zwischenelement mit dem Abstandselement und/oder einem jeweiligen der Messelemente verbunden ist, wobei zwischen dem ersten Befestigungselement und dem ersten Zwischenelement ein erstes Gelenk angeordnet ist und zwischen dem ersten Zwischenelement und dem Abstandselement und/oder dem jeweiligen der Messelemente ein zweites Gelenk angeordnet ist, und/oder
das zweite Befestigungselement über ein zweites Zwischenelement mit dem Abstandselement und/oder einem jeweiligen der Messelemente verbunden ist, wobei zwischen dem zweiten Befestigungselement und dem zweiten Zwischenelement ein drittes Gelenk angeordnet ist und zwischen dem zweiten Zwischenelement und dem Abstandselement und/oder dem jeweiligen der Messelemente ein viertes Gelenk angeordnet ist.

11. Vorrichtung gemäß Anspruch 10, **dadurch gekennzeichnet, dass**
das erste Zwischenelement eine Arretiereinrichtung aufweist zum gleichzeitigen Arretieren der ersten und zweiten Gelenke, und/oder
das zweite Zwischenelement eine Arretiereinrichtung aufweist zum gleichzeitigen Arretieren der dritten und vierten Gelenke.

12. Vorrichtung gemäß einem der Ansprüche 1 bis 11, **dadurch gekennzeichnet, dass**
das erste und/oder zweite Befestigungselement einen Magnethalter zur Befestigung an dem Maschinenteil der Werkzeugmaschine aufweist, und
der Magnethalter einen schaltbaren Elektromagnet und/oder einen mechanisch schaltbaren Magnetfuß aufweist.

13. Vorrichtung gemäß einem der vorstehenden Ansprüche, **dadurch gekennzeichnet, dass**
das Abstandselement einen vorgegebenen Abstand zwischen dem ersten und zweiten Messelement definiert, und
der vorgegebene Abstand zwischen dem ersten und zweiten Messelement größer oder gleich 100 mm ist, und
der vorgegebene Abstand zwischen dem ersten und zweiten Messelement kleiner oder gleich 800 mm ist.

14. Vorrichtung gemäß Anspruch 13, **dadurch gekennzeichnet, dass**
die Vorrichtung zum Einsatz an einer vorbestimmten Werkzeugmaschine vorgesehen ist, wobei die Werkzeugmaschine eine steuerbare Linearachse aufweist und das Abstandselement einen vorgegebenen Abstand zwischen dem ersten und zweiten Messelement aufweist, der 30% bis 70% der Achslänge der steuerbaren Linearachse beträgt.

15. System umfassend eine numerisch gesteuerte Werkzeugmaschine und eine Vorrichtung zum Einsatz an der numerisch gesteuerten Werkzeugmaschine gemäß einem der vorstehenden Ansprüche.

## Claims

1. A device (1) for use on a numerically controlled machine tool for application in a method for measuring said numerically controlled machine tool (100), said device comprising:
- a first measuring element (3) for measuring via a measuring apparatus,
- a second measuring element (3) for measurement via said measuring apparatus,
- a spacer element on which said first measuring element and said second measuring element are arranged spaced apart from each other, and
- a first fastening element (4) having a first fastening portion for fastening said device to said machine part (20) of said machine tool and a second fastening element (4) having a second fastening portion for fastening to said machine part of said machine tool,
wherein said first fastening element and said second fastening element are arranged on said spacer element spaced apart from each other,
**characterized in that**
said first and second fastening elements are each fastened to said spacer element and/or to a respective one of said measuring elements via a lockable connection, wherein the lockable connection makes it possible to fix the fastening elements to the machine part, while the position of the spacer element and/or measuring element relative to the fastening elements is still variable.

2. The device according to claim 1, **characterized in that**
said first and second measuring elements are each fastened to said spacer element via a rigid connection.

3. The device according to one of the preceding claims, **characterized in that**
said spacer element has a portion arranged between said first and second measuring element, which is formed from a material which has a coefficient of thermal expansion of less than or equal to 3.0 × 10⁻⁶ K⁻¹; or
said spacer element has a portion arranged between said first and second measuring element, which is formed from a material which has a coefficient of thermal expansion of less than or equal to 3.0 × 10⁻⁶ K⁻¹ in the spacing direction between said first and second measuring elements.

4. The device according to claim 1 or 2, **characterized in that**
said spacer element includes a material which, at least between said first and second measuring elements, has a thermal expansion coefficient of less than or equal to 3.0 × 10⁻⁶ K⁻¹; or
said spacer element includes a material which, at least between said first and second measuring elements in the spacing direction between said first and second measuring elements, has a coefficient of thermal expansion of less than or equal to 3.0 × 10⁻⁶ K⁻¹.

5. The device according to one of the preceding claims, **characterized in that**
said spacer element has a portion arranged between said first and second measuring elements which is formed of a carbon fiber reinforced plastic, or
said spacer element is formed of a carbon fiber reinforced plastic, and said spacer element is configured as a carbon fiber rod.

6. The device according to one of claims 1 to 4, **characterized in that**
said spacer element has a portion arranged between said first and second measuring elements which is formed of quartz glass, or
said spacer element is formed of quartz glass, and
said spacer element is configured as a quartz glass rod

7. The device according to one of the preceding claims, **characterized in that** the first and/or the second measuring element is a measuring ball or has at least one measuring ball portion.

8. The device according to one of claims 1 to 7, **characterized in that**
the first and/or second fastening element is pivotable and/or freely rotatable relative to said spacer element in the unlocked state of said lockable connection.

9. The device according to one of claims 1 to 8, **characterized in that**
said lockable connection of the first and/or second fastening element has one or more joints, in particular rotary and/or ball joints.

10. The device according to one of claims 1 to 9, **characterized in that**
said first fastening element is connected with said spacer element and/or a respective one of said measuring elements via a first intermediate element, wherein a first joint is arranged between said first fastening element and said first intermediate element and a second joint is arranged between said first intermediate element and said spacer element and/or the respective one of said measuring elements, and/or
said second fastening element is connected with said spacer element and/or a respective one of said measuring elements via a second intermediate element, wherein a third joint is arranged between said second fastening element and said second intermediate element and a fourth joint is arranged between said second intermediate element and said spacer element and/or the respective one of said measuring elements.

11. The device according to claim 10, **characterized in that**
said first intermediate element has a locking means for simultaneously locking said first and second joints, and/or
said second intermediate element has a locking device for simultaneously locking said third and fourth joints.

12. The device according to at least one of claims 1 to 11, **characterized in that**
the first and/or second fastening element comprises a magnetic holder for fastening to said machine part of said machine tool, and
said magnetic holder includes a switchable electromagnet and/or a mechanically switchable magnetic base.

13. The device according to one of the preceding claims, **characterized in that**
said spacer element defines a predetermined distance between said first and second measuring elements, and
said predetermined distance between said first and second measuring elements is greater than or equal to 100 mm, and
said predetermined distance between said first and second measuring elements is less than or equal to 800 mm.

14. The device according to claim 13, **characterized in that**
said device is provided for use on a predetermined machine tool, wherein said machine tool comprises a controllable linear axis and said spacer element has a predetermined distance between said first and second measuring elements, the distance being 30 % to 70 % of the axial length of said controllable linear axis.

15. A system comprising a numerically controlled machine tool and a device for use on the numerically controlled machine tool according to one of the preceding claims.

## Revendications

1. Dispositif (1) destiné à être inséré au niveau d'une machine-outil (100) commandée numériquement pour une utilisation dans un procédé de mesurage de la machine-outil commandée numériquement, avec :
- un premier élément de mesurage (3) pour un mesurage par un dispositif de mesurage,
- un second élément de mesurage (3) pour un mesurage par le dispositif de mesurage,
- un élément d'espacement au niveau duquel le premier élément de mesurage et le second élément de mesurage sont agencés à distance l'un de l'autre, et
- un premier élément de fixation (4) avec une première section de fixation pour une fixation du dispositif contre une pièce de machine (20) de la machine-outil et un second élément de fixation (4) avec une seconde section de fixation pour une fixation contre la pièce de machine de la machine-outil,
dans lequel le premier élément de fixation et le second élément de fixation sont agencés à distance l'un de l'autre au niveau de l'élément d'espacement,
**caractérisé en ce que**
le premier et le second élément de fixation sont respectivement fixés sur l'élément d'espacement et/ou sur l'un respectif des éléments de mesurage via une liaison blocable, dans lequel la liaison blocable peut ainsi fixer les éléments de fixation sur la pièce de machine pendant que la position de l'élément d'espacement et/ou de l'élément de mesurage par rapport aux éléments de fixation peut encore être modifiée.

2. Dispositif selon la revendication 1, **caractérisé en ce que**
le premier et le second élément de mesurage sont respectivement fixés sur l'élément d'espacement via une liaison rigide.

3. Dispositif selon l'une des revendications précédentes, **caractérisé en ce que**
l'élément d'espacement présente une section agencée entre le premier et le second élément de mesurage, qui est fabriquée dans un matériau qui présente un coefficient de dilatation thermique inférieur ou égal à 3,0 · 10-6 K-1, ou
l'élément d'espacement présente une section agencée entre le premier et le second élément de mesurage, qui est fabriquée dans un matériau qui, dans la direction d'espacement entre le premier et le second élément de mesurage, présente un coefficient de dilatation thermique inférieur ou égal à 3,0 · 10-6 K-1.

4. Dispositif selon la revendication 1 ou 2, **caractérisé en ce que** l'élément d'espacement présente un matériau qui, au moins entre le premier et le second élément de mesurage, présente un coefficient de dilatation thermique inférieur ou égal à 3,0 · 10-6 K-1, ou
l'élément d'espacement présente un matériau qui, au moins entre le premier et le second élément de mesurage dans la direction d'espacement entre le premier et le second élément de mesurage, présente un coefficient de dilatation thermique inférieur ou égal à 3,0 · 10-6 K-1.

5. Dispositif selon l'une des revendications précédentes, **caractérisé en ce que**
l'élément d'espacement présente une section agencée entre le premier et le second élément de mesurage, qui est fabriquée dans une matière plastique renforcée par des fibres de carbone, ou
l'élément d'espacement est conçu dans une matière plastique renforcée par des fibres de carbone, et
l'élément d'espacement est conçu en tant que barre en fibres de carbone.

6. Dispositif selon l'une des revendications 1 à 4, **caractérisé en ce que**
l'élément d'espacement présente une section agencée entre le premier et le second élément de mesurage, qui est conçue en verre de quartz, ou
l'élément d'espacement est conçu en verre de quartz, et
l'élément d'espacement est conçu en tant que barre en verre de quartz.

7. Dispositif selon l'une des revendications précédentes, **caractérisé en ce que**
le premier et/ou le second élément de mesurage est une boule de mesure ou du moins présente une section de boule de mesure.

8. Dispositif selon l'une des revendications 1 à 7, **caractérisé en ce que**
le premier et/ou le second élément de mesurage peut, à l'état non bloqué de la liaison blocable, être librement pivoté et/ou mis en rotation par rapport à l'élément d'espacement.

9. Dispositif selon l'une des revendications 1 à 8, **caractérisé en ce que**
la liaison blocable du premier et/ou du second élément de mesurage présente une ou plusieurs articulations, en particulier des articulations tournantes et/ou sphériques.

10. Dispositif selon l'une des revendications 1 à 9, **caractérisé en ce que**
le premier élément de fixation est relié à l'élément d'espacement et/ou à l'un respectif des éléments de mesurage via un premier élément intermédiaire, dans lequel une première articulation est agencée entre le premier élément de fixation et le premier élément intermédiaire, et une deuxième articulation est agencée entre le premier élément intermédiaire et l'élément d'espacement et/ou l'un respectif des éléments de mesurage, et/ou
le second élément de fixation est relié à l'élément d'espacement et/ou à l'un respectif des éléments de mesurage via un second élément intermédiaire, dans lequel une troisième articulation est agencée entre le second élément de fixation et le second élément d'espacement, et une quatrième articulation est agencée entre le second élément intermédiaire et l'élément d'espacement et/ou l'un respectif des éléments de mesurage.

11. Dispositif selon la revendication 10, **caractérisé en ce que**
le premier élément intermédiaire présente un équipement de blocage pour un blocage simultané des première et deuxième articulations, et/ou
le second élément intermédiaire présente un équipement de blocage pour un blocage simultané des troisième et quatrième articulations.

12. Dispositif selon l'une des revendications 1 à 11, **caractérisé en ce que**
le premier et/ou le second élément de fixation présente un porte-aimant pour un fixation sur la pièce de machine de la machine-outil, et
le porte-aimant présente un électro-aimant commutable et/ou une base d'aimant mécaniquement commutable.

13. Dispositif selon l'une des revendications précédentes, **caractérisé en ce que**
l'élément d'espacement définit un espacement prédéfini entre le premier et le second élément de mesurage, et
l'espacement prédéfini est supérieur ou égal à 100 mm entre le premier et le second élément de mesurage, et
l'espacement prédéfini est inférieur ou égal à 800 mm entre le premier et le second élément de mesurage.

14. Dispositif selon la revendication 13, **caractérisé en ce que**
le dispositif est prévu pour être inséré au niveau d'une machine-outil prédéterminée, dans lequel la machine-outil présente un axe linéaire pouvant être commandé et l'élément d'espacement présente un espacement prédéfini entre le premier et le second élément de mesurage, qui représente 30 % à 70 % de la longueur d'axe de l'axe linéaire pouvant être commandé.

15. Système comprenant une machine-outil commandée numériquement et un dispositif destiné à être inséré au niveau de la machine-outil commandée numériquement selon l'une des revendications précédentes.
